# EUROPEAN PATENT APPLICATION

(11) **EP 4 354 934 A1**
(43) Date of publication of application: **17.04.2024**
(21) Application number: 22851909.6
(22) Date of filing: 21.07.2022
(51) Int. Cl.: H04W 16/28

(54) **COMMUNICATION METHOD AND COMMUNICATION APPARATUS**

(30) Priority: 06.08.2021 CN 202110904516
(71) Applicant: Huawei Technologies Co., Ltd., Longgang Shenzhen, Guangdong 518129 (CN)
(72) Inventor: YUAN, Shitong, Shenzhen, Guangdong 518129 (CN); ZHANG, Xi, Shenzhen, Guangdong 518129 (CN)
(74) Representative: Isarpatent
(86) International application number: PCT/CN2022/106928
(87) International publication number: WO 2023/011195

(57) **Abstract**

This application provides a communication method and a communication apparatus. In comparison with an implementation in which there is a high communication delay in a conventional beam management process, after a network device indicates in advance that a first beam is for beam switching, and a terminal device reports a first measurement report corresponding to the first beam, the terminal device can determine, without waiting for a beam management instruction delivered by the network device, that the first beam can be for beam switching, so that a delay in a beam management process can be reduced, thereby improving communication quality. In this method, a terminal device receives first indication information from a network device, where the first indication information indicates that a first beam associated with at least one reference signal (reference signal, RS) corresponding to a first reporting configuration is for beam switching. The terminal device performs measurement based on the first reporting configuration, to obtain a first measurement report. The terminal device sends the first measurement report to the network device.

## Description

This application claims priority to Chinese Patent Application No. 202110904516.9, filed with the China National Intellectual Property Administration on August 6, 2021 and entitled "COMMUNICATION METHOD AND COMMUNICATION APPARATUS", which is incorporated herein by reference in its entirety.

### TECHNICAL FIELD

This application relates to the field of wireless technologies, and in particular, to a communication method and a communication apparatus.

### BACKGROUND

A beam is a communication resource. One beam may include one or more antenna ports, for transmission of a data channel, a control channel, a sounding signal, and the like. For example, a transmit beam may refer to distribution of signal strength formed in different directions in space after a signal is transmitted through an antenna, and a receive beam may refer to distribution of signal strength that is in different directions in space and that is of a radio signal received from an antenna.

Currently, in a conventional beam management process, a terminal device needs to perform beam measurement based on a time-frequency resource that is configured by a network device and that is for reporting a beam measurement result, to obtain a measurement result of the beam measurement and report the measurement result to the network device. Then, the network device performs control based on a measurement result reported by one or more terminal devices, and delivers an instruction for beam management, so that the terminal device performs beam management based on the instruction. For example, based on the instruction, the terminal device keeps communicating with the network device through an original beam or communicates with the network device through a new beam.

However, when quality of the original beam deteriorates or the original beam is unavailable due to movement, rotation, a posture change, or the like of the terminal device, because the network device needs to perform control based on the measurement result reported by the terminal device and deliver the instruction for beam management, to trigger the terminal device to perform beam management, there is a high delay in the beam management process, and communication quality is affected.

### SUMMARY

Embodiments of this application provide a communication method and a communication apparatus. In comparison with an implementation in which there is a high communication delay in a conventional beam management process, after a network device indicates, in advance based on first indication information, that a first beam is for beam switching, and a terminal device reports a first measurement report corresponding to the first beam, the terminal device can determine, without waiting for a beam management instruction delivered by the network device, that the first beam can be for beam switching, so that a delay in a beam management process can be reduced, thereby improving communication quality.

A first aspect of embodiments of this application provides a communication method. The method may be performed by a terminal device, or may be performed by a component (for example, a processor, a chip, or a chip system) of the terminal device. In this method, a terminal device first receives first indication information from a network device. The first indication information indicates that a first beam associated with at least one reference signal (reference signal, RS) corresponding to a first reporting configuration is for beam switching. Then, the terminal device performs measurement based on the first reporting configuration, to obtain a first measurement report. Then, the terminal device sends the first measurement report to the network device.

Based on the foregoing technical solution, the first indication information received by the terminal device from the network device indicates that the first beam associated with the at least one RS corresponding to the first reporting configuration is for beam switching. Then, after the terminal device performs beam measurement based on the first reporting configuration, and obtains and reports the first measurement report, the terminal device determines that the first beam can be for beam switching. In comparison with an implementation in which there is a high communication delay in a conventional beam management process, after the network device indicates, in advance based on the first indication information, that the first beam is for beam switching, and the terminal device reports the first measurement report corresponding to the first beam, the terminal device can determine, without waiting for a beam management instruction delivered by the network device, that the first beam can be for beam switching, so that a delay in a beam management process can be reduced, thereby improving communication quality.

In a possible implementation of the first aspect, the first reporting configuration includes the at least one RS (in other words, the at least one RS is included in the first reporting configuration). Alternatively, the first reporting configuration includes a first RS, and the at least one RS is associated with the first RS (in other words, the at least one RS is associated with the first RS, and the first RS is included in the first reporting configuration).

Based on the foregoing technical solution, there are a plurality of implementations for the at least one RS associated with the first beam. The at least one RS may be a part of a plurality of RSs included in the first reporting configuration, or the at least one RS may be associated with the part of RSs. This is not limited herein.

Optionally, that the at least one RS is associated with the first RS may be represented as that the at least one RS and the first RS are associated with a same transmission configuration indicator state (transmission configuration indicator state, TCI state), or may be represented as that there is a quasi co-location (quasi co-location, QCL) relationship between the at least one RS and the first RS.

In a possible implementation of the first aspect, the first indication information satisfies at least one of the following:
the first indication information includes an identifier of the at least one RS;
the first indication information includes an identifier of the first reporting configuration;
the first reporting configuration is included in a CSI resource list that is configured based on semi-persistence SP, and the first indication information further indicates to activate the first reporting configuration in the CSI resource list;
the first indication information includes an identifier of a first TCI state associated with the first reporting configuration; or
the first reporting configuration is included in a trigger state list, and the first indication information indicates an identifier of the first reporting configuration in the trigger state list.

Based on the foregoing technical solution, the first indication information that indicates that the first beam associated with the at least one RS corresponding to the first reporting configuration is for beam switching may indicate, in the foregoing plurality of manners, that a beam for beam switching is the first beam.

Optionally, the terminal device may determine, based on a configuration of the network device, that the first indication information satisfies at least one of the foregoing items. Alternatively, the terminal device determines, in a preconfigured manner, that the first indication information satisfies at least one of the foregoing items. This is not limited herein.

Optionally, when the terminal device determines, based on the configuration of the network device, that the first indication information satisfies at least one of the foregoing items, the configuration of the network device and the first indication information may be carried in a same message, or may be carried in different messages. This is not limited herein.

In a possible implementation of the first aspect, when at least one of the following is satisfied, that the first beam associated with the first reporting configuration is for beam switching includes:
a reference signal received power (reference signal received power, RSRP) of the at least one RS is greater than a first threshold;
a signal to interference plus noise ratio (signal to interference plus noise ratio, SINR) of the at least one RS is greater than a second threshold;
a TCI state associated with the at least one RS is an activated TCI state;
the first reporting configuration is configuration information configured in a periodic manner;
the first reporting configuration is configuration information configured in a semi-persistence manner;
the first reporting configuration is configuration information configured in an aperiodic configuration manner; or
the first reporting configuration is configuration information configured based on a tracking reference signal (tracking reference signal, TRS) that is aperiodically configured.

Based on the foregoing technical solution, the first beam indicated by the first indication information is not necessarily for beam switching, and may be further limited by any one of the foregoing conditions, to ensure that the first beam is a beam that satisfies a condition and that is obtained by the terminal device through measurement, or ensure that the first beam is a beam corresponding to a condition configured by the network device.

Optionally, when the terminal device determines, based on a configuration of the network device, that at least one of the foregoing conditions is satisfied, the first beam associated with the first reporting configuration is for beam switching. Alternatively, when the terminal device determines, in a preconfigured manner, that at least one of the foregoing conditions is satisfied, the first beam associated with the first reporting configuration is for beam switching. This is not limited herein.

Optionally, when the terminal device determines, based on the configuration of the network device, that at least one of the foregoing items is satisfied, the configuration of the network device and the first indication information may be carried in a same message, or may be carried in different messages. This is not limited herein.

In a possible implementation of the first aspect, the method further includes: The terminal device sends first capability information to the network device. The first capability information indicates effective duration of the first beam.

Optionally, the first capability information and the first measurement report are carried in a same message.

Optionally, the first capability information and the first measurement report are carried in different messages. For example, the terminal device may send the first capability information to the network device before sending the first measurement report to the network device. For another example, the terminal device may send the first capability information to the network device after sending the first measurement report to the network device. For another example, the terminal device may send the first capability information to the network device before receiving the first indication information. For another example, the terminal device may send the first capability information to the network device after receiving the first indication information.

Based on the foregoing technical solution, limited by a communication delay, a radio frequency adjustment delay, or the like, the terminal device may further send, to the network device, the first capability information that indicates the effective duration of the first beam, so that the network device determines the effective duration of the first beam based on the first capability information, and communicates with the terminal device based on the first beam after an effective moment corresponding to the effective duration of the first beam.

In a possible implementation of the first aspect, before the effective moment corresponding to the effective duration of the first beam, the method further includes: The terminal device receives second TCI state information from the network device. A second beam corresponding to an RS indicated by the second TCI state information is for beam switching. Then, the terminal device receives downlink data based on the second beam.

Based on the foregoing technical solution, before the effective moment indicated by the effective duration of the first beam, the terminal device can further receive the downlink data based on the second beam corresponding to the RS indicated by the second TCI state information sent by the network device. That is, the terminal device receives the downlink data from the network device based on the second beam temporarily/newly configured by the network device, to improve flexibility of implementing the solution.

In a possible implementation of the first aspect, after the terminal device sends the first measurement report to the network device, the method further includes: The terminal device receives second indication information from the network device, where the second indication information indicates that a beam indicated by the first measurement report takes effect. Alternatively, the terminal device receives third indication information from the network device, where the third indication information indicates that the first measurement report takes effect after first duration. Alternatively, the terminal device receives a first downlink control information (downlink control information, DCI) message from the network device, where the first DCI message indicates that the first measurement report takes effect after second duration.

Based on the foregoing technical solution, after the terminal device sends the first measurement report to the network device, the network device may further indicate, by using the foregoing plurality of implementations, the effective moment at which the terminal device performs beam switching based on the first beam corresponding to the first measurement report. Therefore, the terminal device determines the effective moment of the first beam based on an indication of the network device, and performs beam switching based on the effective moment of the first beam.

In a possible implementation of the first aspect, before the terminal device performs measurement based on the first reporting configuration, to obtain the first measurement report, the method further includes: The terminal device receives, from the network device, configuration information of the first reporting configuration.

Based on the foregoing technical solution, the terminal device may further determine the first reporting configuration based on the configuration information that is of the first reporting configuration and that is delivered by the network device, and perform a process of beam measurement reporting based on the first reporting configuration.

In a possible implementation of the first aspect, the configuration information of the first reporting configuration includes at least one of the following:
a TCI state identifier, indicating a TCI state associated with the first reporting configuration;
a physical cell identifier PCI, indicating a physical cell corresponding to the first beam;
a first field, where when a value of the first field is a first preset value, the first field indicates that the first beam is allowed to be for beam switching; or
a second field, where when a value of the second field is a second preset value, the second field indicates that the first beam is for beam switching of a plurality of carriers CCs.

Based on the foregoing technical solution, the configuration information that is of the first reporting configuration and that is delivered by the network device may further include at least one piece of the foregoing information, so that, in a process of performing beam switching based on the first beam, the terminal device can further improve the beam switching process by using the at least one piece of the foregoing information.

Optionally, the first preset value and the second preset value may be a same value, or may be different values. This is not limited herein. In addition, when the configuration information of the first reporting configuration includes both the first field and the second field, the first field and the second field may be separately carried by using separate bit information, or both the first field and the second field may be indicated by using joint bit information. This is not limited herein.

In a possible implementation of the first aspect, the configuration information of the first reporting configuration is carried in second DCI. The second DCI is for scheduling data on a physical uplink data channel (physical uplink shared channel, PUSCH).

Based on the foregoing technical solution, the configuration information that is of the first reporting configuration and that is delivered by the network device may be specifically carried in DCI (for example, the second DCI), and a specific manner of carrying the configuration information of the first reporting configuration is provided.

Optionally, the first indication information indicating that the first beam associated with the at least one RS corresponding to a reporting configuration of the first reporting configuration is for beam switching may be explicitly configured, or may be implicitly configured. For example, when the configuration information of the first reporting configuration may be specifically carried in DCI (for example, the second DCI) and the second DCI is for scheduling the data on the PUSCH, the second DCI may be DCI (DCI 0_2) in a format 0_2. In this case, the network device implicitly configures the first indication information by using the second DCI, and the terminal device implicitly determines the first indication information based on the received second DCI.

In a possible implementation of the first aspect, the configuration information of the first reporting configuration and the first indication information are carried in a same message.

Based on the foregoing technical solution, a configuration manner in which the configuration information of the first reporting configuration and the first indication information are carried in the same message can reduce signaling overheads of message sending and receiving, to save a communication resource.

Optionally, the configuration information of the first reporting configuration may alternatively be carried in a different message. This is not limited herein.

In a possible implementation of the first aspect, the at least one RS includes a TRS. The TRS is not repeatedly configured, and there is a quasi co-location QCL relationship between the TRS and a first synchronization signal block (synchronization signal/physical broadcast channel block, SS/PBCH block or SSB).

The SSB may also be referred to as a synchronization signal/physical broadcast channel block.

A second aspect of embodiments of this application provides a communication method. The method may be performed by a network device, or may be performed by a component (for example, a processor, a chip, or a chip system) of the network device. In the method, a network device first sends first indication information to a terminal device. The first indication information indicates that a first beam associated with at least one reference signal RS corresponding to a first reporting configuration is for beam switching. Then, the network device receives a first measurement report from the terminal device. The first measurement report is a measurement result of the first reporting configuration.

Based on the foregoing technical solution, the first indication information sent by the network device to the terminal device indicates that the first beam associated with the at least one RS corresponding to the first reporting configuration is for beam switching. Then, after the network device receives the first measurement report from the terminal device, the terminal device determines that the first beam can be for beam switching. In comparison with an implementation in which there is a high communication delay in a conventional beam management process, after the network device indicates, in advance based on the first indication information, that the first beam is for beam switching, and the terminal device reports the first measurement report corresponding to the first beam, the terminal device can determine, without waiting for a beam management instruction delivered by the network device, that the first beam can be for beam switching, so that a delay in a beam management process can be reduced, thereby improving communication quality.

In a possible implementation of the second aspect, the first reporting configuration includes the at least one RS (in other words, the at least one RS is included in the first reporting configuration). Alternatively, the first reporting configuration includes a first RS, and the at least one RS is associated with the first RS (in other words, the at least one RS is associated with the first RS, and the first RS is included in the first reporting configuration).

Based on the foregoing technical solution, there are a plurality of implementations for the at least one RS associated with the first beam. The at least one RS may be a part of a plurality of RSs included in the first reporting configuration, or the at least one RS may be associated with the part of RSs. This is not limited herein.

Optionally, that the at least one RS is associated with the first RS may be represented as that the at least one RS and the first RS are associated with a same transmission configuration indicator state (transmission configuration indicator state, TCI state), or may be represented as that there is a QCL relationship between the at least one RS and the first RS.

In a possible implementation of the second aspect, the first indication information satisfies at least one of the following:
the first indication information includes an identifier of the at least one RS;
the first indication information includes an identifier of the first reporting configuration;
the first reporting configuration is included in a CSI resource list that is configured based on semi-persistence SP, and the first indication information further indicates to activate the first reporting configuration in the CSI resource list; or
the first indication information includes an identifier of a first TCI state associated with the first reporting configuration.

Based on the foregoing technical solution, the first indication information that indicates that the first beam associated with the at least one RS corresponding to the first reporting configuration is for beam switching may indicate, in the foregoing plurality of manners, that a beam for beam switching is the first beam.

Optionally, the terminal device may determine, based on a configuration of the network device, that the first indication information satisfies at least one of the foregoing items. Alternatively, the terminal device determines, in a preconfigured manner, that the first indication information satisfies at least one of the foregoing items. This is not limited herein.

Optionally, when the terminal device determines, based on the configuration of the network device, that the first indication information satisfies at least one of the foregoing items, the configuration of the network device and the first indication information may be carried in a same message, or may be carried in different messages. This is not limited herein.

In a possible implementation of the second aspect, when at least one of the following is satisfied, that the first beam associated with the first reporting configuration is for beam switching includes:
a reference signal received power RSRP of the at least one RS is greater than a first threshold;
a signal to interference plus noise ratio SINR of the at least one RS is greater than a second threshold;
a TCI state associated with the at least one RS is an activated TCI state;
the first reporting configuration is configuration information configured in a periodic manner;
the first reporting configuration is configuration information configured in a semi-persistence manner;
the first reporting configuration is configuration information configured in an aperiodic configuration manner; or
the first reporting configuration is configuration information configured based on a TRS that is aperiodically configured.

Based on the foregoing technical solution, the first beam indicated by the first indication information is not necessarily for beam switching, and may be further limited by any one of the foregoing conditions, to ensure that the first beam is a beam that satisfies a condition and that is obtained by the terminal device through measurement, or ensure that the first beam is a beam corresponding to a condition configured by the network device.

Optionally, when the terminal device determines, based on a configuration of the network device, that at least one of the foregoing conditions is satisfied, the first beam associated with the first reporting configuration is for beam switching. Alternatively, when the terminal device determines, in a preconfigured manner, that at least one of the foregoing conditions is satisfied, the first beam associated with the first reporting configuration is for beam switching. This is not limited herein.

Optionally, when the terminal device determines, based on the configuration of the network device, that at least one of the foregoing items is satisfied, the configuration of the network device and the first indication information may be carried in a same message, or may be carried in different messages. This is not limited herein.

In a possible implementation of the second aspect, the network device receives first capability information from the terminal device. The first capability information indicates effective duration of the first beam.

Optionally, the first capability information and the first measurement report are carried in a same message.

Optionally, the first capability information and the first measurement report are carried in different messages. For example, the network device may receive the first capability information from the terminal device before receiving the first measurement report from the terminal device. For another example, the network device may receive the first capability information from the terminal device after receiving the first measurement report from the terminal device. For another example, the network device may receive the first capability information from the terminal device before sending the first indication information. For another example, the network device may receive the first capability information from the terminal device after sending the first indication information.

Based on the foregoing technical solution, limited by a communication delay, a radio frequency adjustment delay, or the like, the terminal device may further send, to the network device, the first capability information that indicates the effective duration of the first beam, so that the network device determines the effective duration of the first beam based on the first capability information, and communicates with the terminal device based on the first beam after an effective moment corresponding to the effective duration of the first beam.

In a possible implementation of the second aspect, before the effective moment corresponding to the effective duration of the first beam, the method further includes: The terminal device receives second TCI state information from the network device. A second beam corresponding to an RS indicated by the second TCI state information is for beam switching. Then, the terminal device sends downlink data based on the second beam.

Based on the foregoing technical solution, before the effective moment indicated by the effective duration of the first beam, the network device sends the TCI state information to the terminal device, so that the second terminal device can further receive the downlink data based on the second beam corresponding to the RS indicated by the second TCI state information sent by the network device. That is, the terminal device receives the downlink data from the network device based on the second beam temporarily/newly configured by the network device, to improve flexibility of implementing the solution.

In a possible implementation of the second aspect, after the network device receives the first measurement report from the terminal device, the method further includes: The network device sends second indication information to the terminal device, where the second indication information indicates that a beam indicated by the first measurement report takes effect. Alternatively, the network device sends third indication information to the terminal device, where the third indication information indicates that the first measurement report takes effect after first duration. Alternatively, the network device sends a first downlink control information DCI message to the terminal device, where the first DCI message indicates that the first measurement report takes effect after second duration.

Based on the foregoing technical solution, after the terminal device sends the first measurement report to the network device, the network device may further indicate, by using the foregoing plurality of implementations, the effective moment at which the terminal device performs beam switching based on the first beam corresponding to the first measurement report. Therefore, the terminal device determines the effective moment of the first beam based on an indication of the network device, and performs beam switching based on the effective moment of the first beam.

In a possible implementation of the second aspect, before the network device receives the first measurement report from the terminal device, the method further includes: The network device sends, to the terminal device, configuration information of the first reporting configuration.

Based on the foregoing technical solution, the terminal device may further determine the first reporting configuration based on the configuration information that is of the first reporting configuration and that is delivered by the network device, and perform a process of beam measurement reporting based on the first reporting configuration.

In a possible implementation of the second aspect, the configuration information of the first reporting configuration includes at least one of the following:
a TCI state identifier, indicating a TCI state associated with the first reporting configuration;
a physical cell identifier PCI, indicating a physical cell corresponding to the first beam;
a first field, where when a value of the first field is a first preset value, the first field indicates that the first beam is allowed to be for beam switching; or
a second field, where when a value of the second field is a second preset value, the second field indicates that the first beam is for beam switching of a plurality of carriers CCs.

Based on the foregoing technical solution, the configuration information that is of the first reporting configuration and that is delivered by the network device may further include at least one piece of the foregoing information, so that, in a process of performing beam switching based on the first beam, the terminal device can further improve the beam switching process by using the at least one piece of the foregoing information.

Optionally, the first preset value and the second preset value may be a same value, or may be different values. This is not limited herein. In addition, when the configuration information of the first reporting configuration includes both the first field and the second field, the first field and the second field may be separately carried by using separate bit information, or both the first field and the second field may be indicated by using joint bit information. This is not limited herein.

In a possible implementation of the second aspect, the configuration information of the first reporting configuration is carried in second DCI. The second DCI is for scheduling data on a physical uplink data channel PUSCH.

Based on the foregoing technical solution, the configuration information that is of the first reporting configuration and that is delivered by the network device may be specifically carried in DCI (for example, the second DCI), and a specific manner of carrying the configuration information of the first reporting configuration is provided.

Optionally, the first indication information indicating that the first beam associated with the at least one RS corresponding to a reporting configuration of the first reporting configuration is for beam switching may be explicitly configured, or may be implicitly configured. For example, when the configuration information of the first reporting configuration may be specifically carried in DCI (for example, the second DCI) and the second DCI is for scheduling the data on the PUSCH, the second DCI may be DCI (DCI 0_2) in a format 0_2. In this case, the network device implicitly configures the first indication information by using the second DCI, and the terminal device implicitly determines the first indication information based on the received second DCI.

In a possible implementation of the second aspect, the configuration information of the first reporting configuration and the first indication information are carried in a same message.

Based on the foregoing technical solution, a configuration manner in which the configuration information of the first reporting configuration and the first indication information are carried in the same message can reduce signaling overheads of message sending and receiving, to save a communication resource.

Optionally, the configuration information of the first reporting configuration may alternatively be carried in a different message. This is not limited herein.

In a possible implementation of the second aspect, the at least one RS includes a tracking reference signal TRS. The TRS is not repeatedly configured, and there is a quasi co-location QCL relationship between the TRS and a first synchronization signal block SSB.

A third aspect of embodiments of this application provides a communication apparatus (where for example, the communication apparatus is a terminal device), including a transceiver unit and a processing unit.

The transceiver unit is configured to receive first indication information from a network device. The first indication information indicates that a first beam associated with at least one reference signal RS corresponding to a first reporting configuration is for beam switching.

The processing unit is configured to perform measurement based on the first reporting configuration, to obtain a first measurement report.

The transceiver unit is further configured to send the first measurement report to the network device.

In a possible implementation of the third aspect:
The first reporting configuration includes the at least one RS (in other words, the at least one RS is included in the first reporting configuration). Alternatively, the first reporting configuration includes a first RS, and the at least one RS is associated with the first RS (in other words, the at least one RS is associated with the first RS, and the first RS is included in the first reporting configuration).

In a possible implementation of the third aspect, the first indication information satisfies at least one of the following:
the first indication information includes an identifier of the at least one RS;
the first indication information includes an identifier of the first reporting configuration;
the first reporting configuration is included in a CSI resource list that is configured based on semi-persistence SP, and the first indication information further indicates to activate the first reporting configuration in the CSI resource list;
the first indication information includes an identifier of a first TCI state associated with the first reporting configuration; or
the first reporting configuration is included in a trigger state list, and the first indication information indicates an identifier of the first reporting configuration in the trigger state list.

In a possible implementation of the third aspect, when at least one of the following is satisfied, that the first beam associated with the first reporting configuration is for beam switching includes:
a reference signal received power RSRP of the at least one RS is greater than a first threshold;
a signal to interference plus noise ratio SINR of the at least one RS is greater than a second threshold;
a TCI state associated with the at least one RS is an activated TCI state;
the first reporting configuration is configuration information configured in a periodic manner;
the first reporting configuration is configuration information configured in a semi-persistence manner;
the first reporting configuration is configuration information configured in an aperiodic configuration manner; or
the first reporting configuration is configuration information configured based on a TRS that is aperiodically configured.

In a possible implementation of the third aspect:
The transceiver unit is further configured to send first capability information to the network device, where the first capability information indicates effective duration of the first beam.

In a possible implementation of the third aspect, before an effective moment corresponding to the effective duration of the first beam:
The transceiver unit is further configured to receive second TCI state information from the network device, where a second beam corresponding to an RS indicated by the second TCI state information is for beam switching.

The processing unit is further configured to receive downlink data based on the second beam.

In a possible implementation of the third aspect:
The transceiver unit is further used for second indication information from the network device, where the second indication information indicates that a beam indicated by the first measurement report takes effect.

Alternatively, the transceiver unit is further used for third indication information from the network device, where the third indication information indicates that the first measurement report takes effect after first duration.

Alternatively, the transceiver unit is further used for a first downlink control information DCI message from the network device, where the first DCI message indicates that the first measurement report takes effect after second duration.

In a possible implementation of the third aspect:
The transceiver unit is further configured to receive, from the network device, configuration information of the first reporting configuration.

In a possible implementation of the third aspect, the configuration information of the first reporting configuration includes at least one of the following:
a TCI state identifier, indicating a TCI state associated with the first reporting configuration;
a physical cell identifier PCI, indicating a physical cell corresponding to the first beam;
a first field, where when a value of the first field is a first preset value, the first field indicates that the first beam is allowed to be for beam switching; or
a second field, where when a value of the second field is a second preset value, the second field indicates that the first beam is for beam switching of a plurality of carriers CCs.

In a possible implementation of the third aspect, the configuration information of the first reporting configuration is carried in second DCI. The second DCI is for scheduling data on a physical uplink data channel PUSCH.

In a possible implementation of the third aspect, the configuration information of the first reporting configuration and the first indication information are carried in a same message.

In a possible implementation of the third aspect, the at least one RS includes a tracking reference signal TRS. The TRS is not repeatedly configured, and there is a quasi co-location QCL relationship between the TRS and a first synchronization signal block SSB.

In the third aspect of embodiments of this application, composition modules of the communication apparatus may be further configured to perform the steps performed in the possible implementations of the first aspect. For details, refer to the first aspect. Details are not described herein again.

A fourth aspect of embodiments of this application provides a communication apparatus (where for example, the communication apparatus is a network device), including a sending unit and a receiving unit.

The sending unit is configured to send first indication information to a terminal device. The first indication information indicates that a first beam associated with at least one reference signal RS corresponding to a first reporting configuration is for beam switching.

The receiving unit is configured to receive a first measurement report from the terminal device. The first measurement report is a measurement result of the first reporting configuration.

In a possible implementation of the fourth aspect:
The first reporting configuration includes the at least one RS (in other words, the at least one RS is included in the first reporting configuration). Alternatively, the first reporting configuration includes a first RS, and the at least one RS is associated with the first RS (in other words, the at least one RS is associated with the first RS, and the first RS is included in the first reporting configuration).

In a possible implementation of the fourth aspect, the first indication information satisfies at least one of the following:
the first indication information includes an identifier of the at least one RS;
the first indication information includes an identifier of the first reporting configuration;
the first reporting configuration is included in a CSI resource list that is configured based on semi-persistence SP, and the first indication information further indicates to activate the first reporting configuration in the CSI resource list; or
the first indication information includes an identifier of a first TCI state associated with the first reporting configuration.

In a possible implementation of the fourth aspect, when at least one of the following is satisfied, that the first beam associated with the first reporting configuration is for beam switching includes:
a reference signal received power RSRP of the at least one RS is greater than a first threshold;
a signal to interference plus noise ratio SINR of the at least one RS is greater than a second threshold;
a TCI state associated with the at least one RS is an activated TCI state;
the first reporting configuration is configuration information configured in a periodic manner;
the first reporting configuration is configuration information configured in a semi-persistence manner;
the first reporting configuration is configuration information configured in an aperiodic configuration manner; or
the first reporting configuration is configuration information configured based on a TRS that is aperiodically configured.

In a possible implementation of the fourth aspect:
The receiving unit is further configured to receive first capability information from the terminal device. The first capability information indicates effective duration of the first beam.

In a possible implementation of the fourth aspect, before an effective moment corresponding to the effective duration of the first beam:
The receiving unit is further configured to receive second TCI state information from the network device, where a second beam corresponding to an RS indicated by the second TCI state information is for beam switching.

The sending unit is further configured to send downlink data based on the second beam.

In a possible implementation of the fourth aspect:
The sending unit is further configured to send second indication information to the terminal device, where the second indication information indicates that a beam indicated by the first measurement report takes effect.

Alternatively, the sending unit is further configured to send third indication information to the terminal device, where the third indication information indicates that the first measurement report takes effect after first duration.

Alternatively, the sending unit is further configured to send a first downlink control information DCI message to the terminal device, where the first DCI message indicates that the first measurement report takes effect after second duration.

In a possible implementation of the fourth aspect:
The sending unit is further configured to send, to the terminal device, configuration information of the first reporting configuration.

In a possible implementation of the fourth aspect, the configuration information of the first reporting configuration includes at least one of the following:
a TCI state identifier, indicating a TCI state associated with the first reporting configuration;
a physical cell identifier PCI, indicating a physical cell corresponding to the first beam;
a first field, where when a value of the first field is a first preset value, the first field indicates that the first beam is allowed to be for beam switching; or
a second field, where when a value of the second field is a second preset value, the second field indicates that the first beam is for beam switching of a plurality of carriers CCs.

In a possible implementation of the fourth aspect, the configuration information of the first reporting configuration is carried in second DCI. The second DCI is for scheduling data on a physical uplink data channel PUSCH.

In a possible implementation of the fourth aspect, the configuration information of the first reporting configuration and the first indication information are carried in a same message.

In a possible implementation of the fourth aspect, the at least one RS includes a tracking reference signal TRS. The TRS is not repeatedly configured, and there is a quasi co-location QCL relationship between the TRS and a first synchronization signal block SSB.

In the fourth aspect of embodiments of this application, composition modules of the communication apparatus may be further configured to perform the steps performed in the possible implementations of the second aspect. For details, refer to the second aspect. Details are not described herein again.

A fifth aspect of embodiments of this application provides a communication apparatus (where for example, the communication apparatus is a terminal device), including at least one logic circuit and an input/output interface.

The input/output interface is configured to input first indication information.

The logic circuit is configured to perform the method in any one of the first aspect or the possible implementations of the first aspect.

A sixth aspect of embodiments of this application provides a communication apparatus (where for example, the communication apparatus is a network device), including at least one logic circuit and an input/output interface.

The input/output interface is configured to output first indication information.

The logic circuit is configured to perform the method in any one of the second aspect or the possible implementations of the second aspect.

A seventh aspect of embodiments of this application provides a communication processing apparatus (where for example, the communication processing apparatus is a terminal device). The communication processing apparatus includes:
a memory, configured to store computer instructions; and
a processor, configured to execute a computer program or the computer instructions stored in the memory, to enable the communication processing apparatus to perform the method in any one of the first aspect or the possible implementations of the first aspect.

An eighth aspect of embodiments of this application provides a communication processing apparatus (where for example, the communication processing apparatus is a network device). The communication processing apparatus includes:
a memory, configured to store computer instructions; and
a processor, configured to execute a computer program or the computer instructions stored in the memory, to enable the communication processing apparatus to perform the method in any one of the second aspect or the possible implementations of the second aspect.

A ninth aspect of embodiments of this application provides a communication processing apparatus (where for example, the communication processing apparatus is a terminal device). The communication processing apparatus includes a processor, and the processor is configured to execute a computer program or computer instructions in a memory, to perform the method in any one of the first aspect or the possible implementations of the first aspect.

A tenth aspect of embodiments of this application provides a communication processing apparatus (where for example, the communication processing apparatus is a network device). The communication processing apparatus includes a processor, and the processor is configured to execute a computer program or computer instructions in a memory, to perform the method in any one of the second aspect or the possible implementations of the second aspect.

An eleventh aspect of embodiments of this application provides a communication processing apparatus (where for example, the communication processing apparatus is a terminal device). The communication processing apparatus includes:
a transceiver, configured to receive and send a signal;
a memory, configured to store computer instructions; and
a processor, configured to execute a computer program or the computer instructions stored in the memory, to enable the communication processing apparatus to perform the method in any one of the first aspect or the possible implementations of the first aspect.

A twelfth aspect of embodiments of this application provides a communication processing apparatus (where for example, the communication processing apparatus is a network device). The communication processing apparatus includes:
a transceiver, configured to receive and send a signal;
a memory, configured to store computer instructions; and
a processor, configured to execute a computer program or the computer instructions stored in the memory, to enable the communication processing apparatus to perform the method in any one of the second aspect or the possible implementations of the second aspect.

A thirteenth aspect of embodiments of this application provides a communication apparatus (where for example, the communication processing apparatus is a terminal device), including at least one processor. The at least one processor is configured to execute a computer program or instructions in a memory, to enable the communication apparatus to perform the method in any one of the first aspect or the possible implementations of the first aspect.

A fourteenth aspect of embodiments of this application provides a communication apparatus (where for example, the communication processing apparatus is a network device), including at least one processor. The at least one processor is configured to execute a computer program or instructions in a memory, to enable the communication apparatus to perform the method in any one of the second aspect or the possible implementations of the second aspect.

A fifteenth aspect of embodiments of this application provides a communication apparatus (where for example, the communication processing apparatus is a terminal device), including a processor, a transceiver, and a memory. The processor is configured to execute a computer program or instructions in the memory, to enable the communication apparatus to perform the method in any one of the first aspect or the possible implementations of the first aspect.

A sixteenth aspect of embodiments of this application provides a communication apparatus (where for example, the communication processing apparatus is a network device), including a processor, a transceiver, and a memory. The processor is configured to execute a computer program or instructions in the memory, to enable the communication apparatus to perform the method in any one of the second aspect or the possible implementations of the second aspect.

A seventeenth aspect of embodiments of this application provides a computer-readable storage medium storing one or more computer-executable instructions. When the computer-executable instructions are executed by a processor, the processor performs the method in any one of the first aspect or the possible implementations of the first aspect. Alternatively, when the computer-executable instructions are executed by a processor, the processor performs the method in any one of the second aspect or the possible implementations of the second aspect.

An eighteenth aspect of embodiments of this application provides a computer program product (or referred to as a computer program) storing one or more computers. When the computer program product is executed by a processor, the processor performs the method in any one of the first aspect or the possible implementations of the first aspect. Alternatively, when the computer program product is executed by a processor, the processor performs the method in any one of the second aspect or the possible implementations of the second aspect.

A nineteenth aspect of embodiments of this application provides a chip system. The chip system includes at least one processor, configured to support a terminal device in implementing a function in any one of the first aspect or the possible implementations of the first aspect.

In a possible design, the chip system may further include a memory. The memory is configured to store program instructions and data that are necessary for the terminal device. The chip system may include a chip, or may include a chip and another discrete component. Optionally, the chip system further includes an interface circuit. The interface circuit provides the program instructions and/or the data for the at least one processor.

A twentieth aspect of embodiments of this application provides a chip system. The chip system includes at least one processor, configured to support a network device in implementing a function in any one of the second aspect or the possible implementations of the second aspect.

In a possible design, the chip system may further include a memory. The memory is configured to store program instructions and data that are necessary for a network device. The chip system may include a chip, or may include a chip and another discrete component. Optionally, the chip system further includes an interface circuit. The interface circuit provides the program instructions and/or the data for the at least one processor.

A twenty-first aspect of embodiments of this application provides a communication system. The communication system includes the terminal device in the third aspect and the network device in the fourth aspect. Alternatively, the communication system includes the terminal device in the fifth aspect and the network device in the sixth aspect. Alternatively, the communication system includes the communication processing apparatus in the seventh aspect and the communication processing apparatus in the eighth aspect. Alternatively, the communication system includes the communication processing apparatus in the ninth aspect and the communication processing apparatus in the tenth aspect. Alternatively, the communication system includes the communication processing apparatus in the eleventh aspect and the communication processing apparatus in the twelfth aspect. Alternatively, the communication system includes the communication processing apparatus in the thirteenth aspect and the communication processing apparatus in the fourteenth aspect. Alternatively, the communication system includes the communication processing apparatus in the fifteenth aspect and the communication processing apparatus in the sixteenth aspect.

For technical effects of any design manner in the third aspect to the twenty-first aspect, refer to technical effects of different implementations of the first aspect or the second aspect. Details are not described herein again.

It should be understood that, for a component in a device, the foregoing "sending" may be referred to as "output", and the foregoing "receiving" may be referred to as "input".

It can be learned from the foregoing technical solution that the first indication information received by the terminal device from the network device indicates that the first beam associated with the at least one RS corresponding to the first reporting configuration is for beam switching. Then, after the terminal device performs beam measurement based on the first reporting configuration, and obtains and reports the first measurement report, the terminal device determines that the first beam can be for beam switching. In comparison with an implementation in which there is a high communication delay in a conventional beam management process, after the network device indicates, in advance based on the first indication information, that the first beam is for beam switching, and the terminal device reports the first measurement report corresponding to the first beam, the terminal device can determine, without waiting for a beam management instruction delivered by the network device, that the first beam can be for beam switching, so that a delay in a beam management process can be reduced, thereby improving communication quality.

### BRIEF DESCRIPTION OF DRAWINGS

FIG. 1a is a schematic diagram of a communication system according to an embodiment of this application;
FIG. 1b is another schematic diagram of a communication system according to an embodiment of this application;
FIG. 1c is another schematic diagram of a communication system according to an embodiment of this application;
FIG. 2 is a schematic diagram of a communication method according to an embodiment of this application;
FIG. 3 is a schematic diagram of a communication method according to an embodiment of this application;
FIG. 4 is another schematic diagram of a communication method according to an embodiment of this application;
FIG. 5 is another schematic diagram of a communication method according to an embodiment of this application;
FIG. 6 is a schematic diagram of a terminal device according to an embodiment of this application;
FIG. 7 is a schematic diagram of a network device according to an embodiment of this application;
FIG. 8 is another schematic diagram of a terminal device according to an embodiment of this application; and
FIG. 9 is another schematic diagram of a network device according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.
(1) Terminal device: The terminal device may be a wireless terminal device that can receive scheduling and indication information of a network device. The wireless terminal device may be a device that provides voice and/or data connectivity for a user, a handheld device with a wireless connection function, or another processing device connected to a wireless modem.
   The terminal device may communicate with one or more core networks or the internet through a radio access network (radio access network, RAN). The terminal device may be a mobile terminal device such as a mobile phone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), a customer premises equipment (customer premises equipment, CPE), a terminal (terminal), user equipment (user equipment, UE), a mobile terminal (mobile terminal, MT), or the like. The terminal device may alternatively be a wearable device and a terminal device in a next generation communication system, for example, a terminal device in a 5G communication system or a terminal device in a future evolved public land mobile network (public land mobile network, PLMN).
(2) Network device: The network device may be a device in a wireless network. For example, the network device may be a RAN node (or device), or may be referred to as a base station, through which a terminal device accesses the wireless network. Currently, some examples of the RAN device are: a next generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) AP, or the like. In addition, in a network structure, the network device may include a central unit (central unit, CU) node, a distributed unit (distributed unit, DU) node, or a RAN device including a CU node and a DU node.

The network device can send configuration information (for example, carried in a scheduling message and/or an indication message) to the terminal device. The terminal device further performs network configuration based on the configuration information, so that network configurations of the network device and the terminal device are aligned. Alternatively, through a network configuration preset in the network device and a network configuration preset in the terminal device, the network configurations of the network device and the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an access and mobility management function (access and mobility management function, AMF), a user plane function (user plane function, UPF), or a session management function (session management function, SMF).

In embodiments of this application, an apparatus configured to implement a function of the network device may be a network device, or may be an apparatus, for example, a chip system, that can support the network device in implementing the function. The apparatus may be mounted in the network device. In the technical solutions provided in embodiments of this application, the technical solutions provided in embodiments of this application are described by using an example in which the apparatus configured to implement the function of the network device is the network device.

(3) Configuration and preconfiguration: In this application, both the configuration and the preconfiguration are used. The configuration means that a base station/server sends configuration information of some parameters or parameter values to a terminal by using a message or signaling, so that the terminal determines a communication parameter or a transmission resource based on the values or the information. Similar to the configuration, the preconfiguration may mean that parameter information or a parameter value is pre-negotiated by the base station/server and the terminal device, or may mean that parameter information or a parameter value that is used by the base station/server or the terminal device is specified in a standard protocol, or may mean that parameter information or a parameter value is pre-stored in the base station/server or the terminal device. This is not limited in this application. Further, these values and parameters may be changed or updated.

(4) DMRS port indication: When scheduling data, for example, scheduling physical downlink shared channel (physical downlink shared channel, PDSCH) data, a network device needs to indicate a corresponding DMRS port, including a quantity of DMRS ports and a DMRS port number. Physical resources occupied by DMRS ports corresponding to different DMRS port numbers are orthogonal, and the physical resources include one or more of a space resource, a time domain resource, and a frequency domain resource. The quantity of DMRS ports is equal to a quantity of transport layers of the PDSCH data. Each DMRS port is in one-to-one correspondence with each transport layer, and channel estimation needs to be performed on a corresponding DMRS port for demodulating a transport layer. If different terminal devices occupy a same time-frequency resource to transmit the PDSCH data, the network device needs to allocate different DMRS port numbers to ensure that DMRSs are orthogonal.

(5) Beam (beam): The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent by using different beams. Optionally, a plurality of beams having a same communication feature or similar communication features may be considered as one beam. One beam may include one or more antenna ports, configured to transmit a data channel, a control channel, a sounding signal, and the like. For example, a transmit beam may be distribution of signal strength formed in different directions in space after a signal is transmitted through an antenna, and a receive beam may be distribution of signal strength that is in different directions in space and that is of a radio signal received from an antenna. It may be understood that the one or more antenna ports forming one beam may also be considered as one antenna port set.

When a low frequency band or an intermediate frequency band is used, a signal may be sent omnidirectionally or at a wide angle. When a high frequency band is used, because of a small carrier wavelength of a high-frequency communication system, an antenna array formed by a plurality of antenna elements may be disposed at a transmitting end and a receiving end. The transmitting end sends a signal based on a beamforming weight, to enable the sent signal to form a spatially directional beam, and the receiving end receives the signal by using the antenna array based on a beamforming weight, so that a received power of the signal at the receiving end can be increased, and a path loss can be avoided.

(6) Quasi co-location (quasi co-location, QCL): The QCL may also be referred to as quasi-co-location. A quasi co-location relationship indicates that a plurality of resources have one or more same or similar communication features. A same communication configuration or similar communication configurations may be used for the plurality of resources having the quasi co-location relationship. For example, if two antenna ports have a quasi co-location relationship, a large-scale property of a channel used for one port to transmit a symbol may be inferred from a large-scale property of a channel used for the other port to transmit a symbol. The large-scale property may include delay spread, an average delay, Doppler spread, a Doppler frequency shift, an average gain, a receiving parameter, a number of a beam received by a terminal device, transmitting/receiving channel correlation, a receiving angle of arrival, spatial correlation of a receiver antenna, a dominant angle of arrival (Angle of Arrival, AoA), an average angle of arrival, AoA spread, and the like. Specifically, that a quasi co-location indication indicates whether at least two groups of antenna ports have a quasi co-location relationship is that the quasi co-location indication indicates whether channel state information reference signals sent by the at least two groups of antenna ports are from a same transmission point, or that the quasi co-location indication indicates whether channel state information reference signals sent by the at least two groups of antenna ports are from a same beam group.

QCL information is for assisting in describing beamforming information and a receiving process of a receiving side of the terminal device. QCL assumption information of four types is defined in a current standard, and the QCL assumption information of the four types is: a QCL type (type) A: a Doppler shift (Doppler shift), Doppler spread (Doppler spread), an average channel delay (average delay), and delay spread (delay spread); a QCL type B: a Doppler shift and Doppler spread; a QCL type C: an average delay and a Doppler shift; and a QCL type D: a spatial reception parameter (spatial rx parameter). To reduce QCL information indication overheads of a network device for the terminal device, a QCL information indication of a PDSCH or a PDCCH indicates that a DM-RS port of the PDCCH (or the PDSCH) and one or more reference signal resources satisfy a QCL assumption relationship, so that the QCL information can be obtained by using the associated one or more reference signal resources, and the PDSCH or the PDCCH can be received by using the information. For example, the reference signal may be a channel state information reference signal (channel state information reference signal, CSI-RS). In addition, the DM-RS and the CSI-RS have a same QCL Type D assumption. In this case, the DM-RS and the CSI-RS have a same receive beam. Therefore, UE may obtain, based on an associated reference signal resource index through inference, information about a receive beam for receiving the PDCCH (or the PDSCH). The QCL information is a spatial feature parameter, and describes a spatial channel feature between antenna ports included in two associated reference signals. This helps the terminal device complete a receive side beamforming or a receiving processing process based on the QCL information.

(7) Reference signal (reference signal, RS): According to a protocol of a long term evolution (long term evolution, LTE) system/a new radio (new radio, NR) system, at a physical layer, uplink communication includes transmission of an uplink physical channel and an uplink signal. The uplink physical channel includes a random access channel (random access channel, PRACH), an uplink control channel (physical uplink control channel, PUCCH), a PUSCH, and the like. The uplink signal includes a channel sounding signal (sounding reference signal, SRS), an uplink control channel demodulation reference signal (PUCCH demodulation reference signal, PUCCH-DMRS), an uplink data channel demodulation reference signal (PUSCH demodulation reference signal, PUSCH-DMRS), an uplink phase noise tracking signal (phase noise tracking reference signal, PTRS), an uplink positioning signal (uplink positioning RS), and the like. Downlink communication includes transmission of a downlink physical channel and a downlink signal. The downlink physical channel includes a broadcast channel (physical broadcast channel, PBCH), a downlink control channel (physical downlink control channel, PDCCH), a PDSCH, and the like. The downlink signal includes a primary synchronization signal (primary synchronization signal, PSS for short)/secondary synchronization signal (secondary synchronization signal, SSS), a downlink control channel demodulation reference signal (PDCCH demodulation reference signal, PDCCH-DMRS), a downlink data channel demodulation reference signal (PDSCH demodulation reference signal, PDSCH-DMRS), a phase noise tracking signal PTRS, a channel state information reference signal (channel state information reference signal, CSI-RS), a cell signal (Cell reference signal, CRS) (where there is no CRS in an NR system, but there is a CRS in an LTE system), a TRS (where there is no TRS in LTE, but there is a TRS in an NR system), and LTE/NR positioning signal (positioning RS).

(8) Transmission configuration indicator (transmission configuration indicator, TCI): A higher layer in a protocol configures QCL by using a TCI-state (TCI-State), and a parameter of the TCI-State is for configuring a quasi co-location relationship between one or two downlink reference signals and a DMRS of a PDSCH. A field indicating the TCI is a field that is in DCI and that indicates quasi co-location of a PDSCH antenna port.

Optionally, the TCI is configured by using radio resource control (radio resource control, RRC), and is referred to as a TCI-state in configuration signaling. In addition, after a base station configures the TCI by using the RRC, the base station sends a media access control control element (media access control control element, MAC CE) to activate one or more TCI states. In addition, the base station may further send DCI to indicate one of the plurality of activated TCIs

The TCI includes one or two QCL relationships or a plurality of QCL relationships. The QCL represents a consistency relationship between a signal/channel to be received currently and a previously known reference signal. If there is a QCL relationship, UE may inherit a receiving or sending parameter used when a reference signal is previously received, to receive or send an upcoming signal/channel.

In addition, if the TCI state includes information indicating that an identifier is a QCL Type-D, the TCI may indicate a beam. A QCL Type-A/B/C indicates information such as a time domain offset and a frequency domain offset, and does not include space domain information. The QCL Type-A/B/C is usually for assisting a terminal in data receiving and demodulation.

(9) In this application, "indicating" may include a direct indication and an indirect indication. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. For example, the configuration information may include but is not limited to one or a combination of at least two of radio resource control signaling, MAC layer signaling, and physical layer signaling. The radio resource control signaling is, for example, RRC signaling. The MAC layer signaling includes, for example, a MAC control element (control element, CE). The physical layer signaling includes, for example, DCI.

(10) The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to an LTE system, an NR system, or another communication system (for example, a next-generation communication system of NR). The communication system includes a network device and a terminal device. The network device serves as a configuration information sending entity, and the terminal device serves as a configuration information receiving entity. Specifically, an entity in the communication system sends configuration information to another entity, and sends data to the another entity, or receives data sent by the another entity. The another entity receives the configuration information, and sends data to the configuration information sending entity based on the configuration information, or receives data sent by the configuration information sending entity. This application may be applied to a terminal device in a connected state or an active state (ACTIVE), or may be applied to a terminal device in a non-connected state (INACTIVE) or an idle state (IDLE).

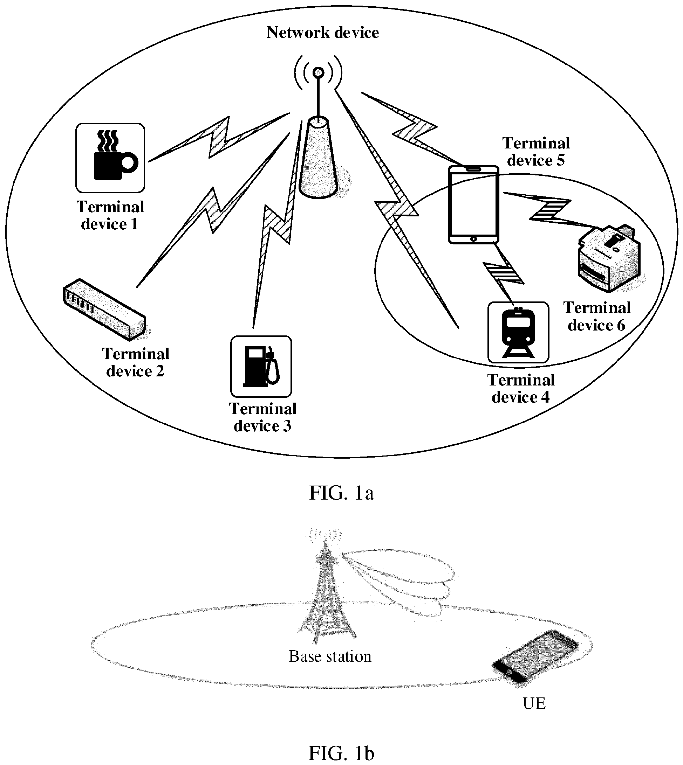

FIG. 1a is a schematic diagram of a communication system according to this application. FIG. 1a shows an example of one network device and six terminal devices. The six terminal devices are respectively a terminal device 1, a terminal device 2, a terminal device 3, a terminal device 4, a terminal device 5, a terminal device 6, and the like. In the example shown in FIG. 1a, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description. A transmitting end may be a network device or a terminal device, and a receiving end may be a network device or a terminal device.

As shown in FIG. 1a, a configuration information sending entity may be a network device. An example in which the network device is a base station (Base Station) and each terminal device is UE is used for description. Configuration information receiving entities may be UE 1 to UE 6. In this case, the base station and the UE 1 to the UE 6 form a communication system. In the communication system, the UE 1 to the UE 6 may send uplink data to the network device, and the network device needs to receive the uplink data sent by the UE 1 to the UE 6. In addition, the network device may send configuration information to the UE 1 to the UE 6.

In addition, in FIG. 1a, the UE 4 to the UE 6 may alternatively form a communication system. In this case, both the configuration information sending entity and the configuration information receiving entity may be UEs. The UE 5 serves as the network device, that is, the configuration information sending entity. The UE 4 and the UE 6 serve as the terminal devices, that is, the configuration information receiving entities. For example, in an internet of vehicles system, the UE 5 separately sends configuration information to the UE 4 and the UE 6, and receives uplink data sent by the UE 4 and the UE 6. Correspondingly, the UE 4 and the UE 6 receive the configuration information sent by the UE 5, and send the uplink data to the UE 5.

As shown in FIG. 1a, a scenario specific to this application mainly includes a base station (a network device) and UE (a terminal device), and may specifically include one or more network devices and one or more terminal devices. For example, a communication scenario that is shown in FIG. 1b and that is of a single network device and a single terminal device is used as an example. The network device may transmit data or control signaling to the terminal device. Specifically, based on network configuration information, the terminal device may report a measurement result (corresponding to a beam) of a reference signal, to switch a serving beam of the terminal device.

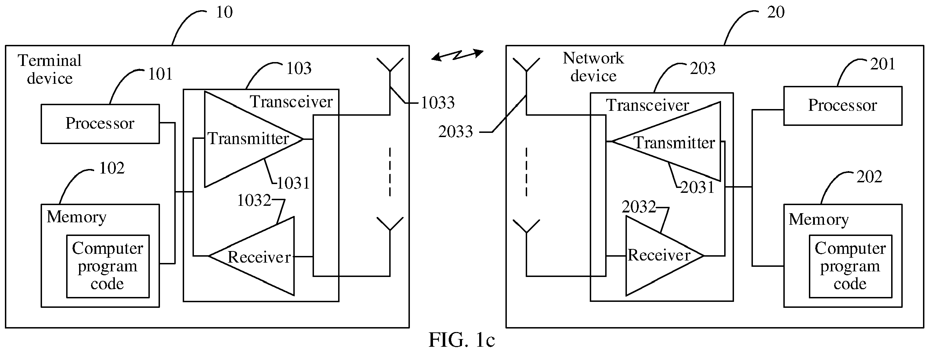

In addition, in the communication systems shown in FIG. 1a and FIG. 1b, communication between each network device and each terminal device may be alternatively represented in another form, as shown in FIG. 1c. A terminal device 10 includes a processor 101, a memory 102, and a transceiver 103. The transceiver 103 includes a transmitter 1031, a receiver 1032, and an antenna 1033. A network device 20 includes a processor 201, a memory 202, and a transceiver 203. The transceiver 203 includes a transmitter 2031, a receiver 2032, and an antenna 2033. The receiver 1032 may be configured to receive transmission control information by using the antenna 1033, and the transmitter 1031 may be configured to send transmission feedback information to the network device 20 by using the antenna 1033. The transmitter 2031 may be configured to send the transmission control information to the terminal device 10 by using the antenna 2033, and the receiver 2032 may be configured to receive, by using the antenna 2033, the transmission feedback information sent by the terminal device 10.

It should be understood that the communication scenarios shown in FIG. 1a, FIG. 1b, and FIG. 1c are merely examples, and a quantity of terminal devices and a quantity of network devices in a communication system are not specifically limited in this application.

In the communication scenarios shown in FIG. 1a, FIG. 1b, and FIG. 1c, the network device and the terminal device may communicate with each other based on a beam. One beam may include one or more antenna ports, configured to transmit a data channel, a control channel, a sounding signal, and the like. For example, a transmit beam may be distribution of signal strength formed in different directions in space after a signal is transmitted through an antenna, and a receive beam may be distribution of signal strength, in different directions in space, of a radio signal received from an antenna.

Currently, in a conventional beam management process, a terminal device needs to perform beam measurement based on a time-frequency resource that is configured by a network device and that is for reporting a beam measurement result, to obtain a measurement result of the beam measurement and report the measurement result to the network device. Then, the network device performs control based on a measurement result reported by one or more terminal devices, and delivers an instruction for beam management, so that the terminal device performs beam management based on the instruction. For example, based on the instruction, the terminal device keeps communicating with the network device through an original beam or communicates with the network device through a new beam.

In a conventional beam management solution, an example in which the terminal device is UE and the network device is a base station is used. The UE may implement beam management in any one or a combination of the following manners.

Manner 1: The UE fixedly receives a beam, and receives a wide beam sent by the base station by using an SSB signal. The UE determines a downlink wide beam with good signal quality (for example, a maximum RSRP), and uses the downlink wide beam as a beam for communication with the base station.

For example, the UE in a connected state reports an SSB measurement result. To be specific, the UE periodically measures an SSB (wide beam measurement), to determine the downlink wide beam.

Manner 2: The base station performs, in a range of a wide beam that has good quality and that is determined by the UE, beam scanning by using a plurality of narrow beams. The UE determines, from the plurality of narrow beams, a downlink narrow beam with good quality, and uses the downlink narrow beam with good quality as a beam for communication with the base station.

For example, the base station configures, for scanning, a plurality of narrow beams corresponding to a CSI-RS, and indicates beams corresponding to a PDCCH and a PDSCH. A terminal side receives the plurality of narrow beams by using a corresponding wide beam, measures the plurality of narrow beams, and reports, to a base station side and as the downlink narrow beam, a narrow beam corresponding to a beam that has good quality and that is measured by the UE.

Manner 3: The base station fixedly sends a reference signal by using a downlink narrow beam, and the UE performs receiving scanning by using different narrow beams, determines a receive beam with good quality, and uses the receive beam with good quality as a beam for communication with the base station.

For example, a base station side uses a good-quality beam corresponding to an SRS as a downlink narrow beam to configure a PUCCH and a PUSCH for the UE, and the UE performs receiving scanning on the PUCCH and the PUSCH based on the downlink narrow beam to select a narrow beam with good quality. In addition, the base station side maintains a beam set with good quality, and the base station may separately maintain an uplink beam set and a downlink beam set.

However, in the foregoing manner 1 to manner 3, when quality of the original beam deteriorates or the original beam is unavailable due to a reason such as movement, rotation, or a posture change of the UE, the base station cannot learn the information in time (when the quality of the beam on the terminal side deteriorates or the beam is unavailable, the base station cannot learn in time). In addition, the base station is triggered to perform beam management only after the UE performs next measurement reporting. An occasion at which the UE performs the next measurement reporting depends on a reporting resource configured by the base station and a periodicity of a downlink reference signal of the base station. If the next reporting occurs after long duration, communication quality is severely affected. In other words, because the base station needs to perform control based on a measurement result reported by the UE and deliver an instruction for beam management, to trigger the UE to perform beam management, there is a high delay in a beam management process, and the communication quality is affected.

For the foregoing problem, currently, another beam management manner is proposed, and is denoted as a manner 4 herein.

In the manner 4, the UE first performs measurement based on a downlink reference signal sent by the base station, to obtain a measurement result. Then, when the UE sends the measurement result to the base station based on a configured reporting condition and a configured reporting resource, the UE further needs to send a beam selection/activation report (beam selection/activation report) to the base station, to indicate that a beam corresponding to the measurement result is for beam switching. In addition, after a preset beam activation latency (beam activation latency), the base station sends a response message to the UE, to indicate that the beam corresponding to the measurement result takes effect. Then, the UE receives a downlink signal by using the beam, and/or the UE sends an uplink signal by using the beam. Correspondingly, the base station sends a downlink signal by using the beam, and/or the base station receives an uplink signal by using the beam.

However, in an implementation process that is based on the foregoing manner 4, a problem of coexistence of common measurement reporting (in the manner 1 to the manner 3) and a reporting mechanism (in the manner 4) for triggering beam switching cannot be resolved. Specifically, measurement reporting mechanisms in the manner 1 to the manner 3 are currently used by the UE to report a measurement result of a reference signal. However, the base station does not use each measurement report of the UE to trigger beam switching in the manner 4. Consequently, in the implementation process of the manner 4, the problem of a high delay in the beam management process still cannot be resolved.

Therefore, this application provides a communication method and a communication apparatus. In comparison with the implementation in which there is a high communication delay in the conventional beam management process, after a network device indicates in advance that a first beam is for beam switching, and a terminal device reports a first measurement report corresponding to the first beam, the terminal device can determine, without waiting for a beam management instruction delivered by the network device, that the first beam can be for beam switching, so that a delay in a beam management process can be reduced, thereby improving communication quality.

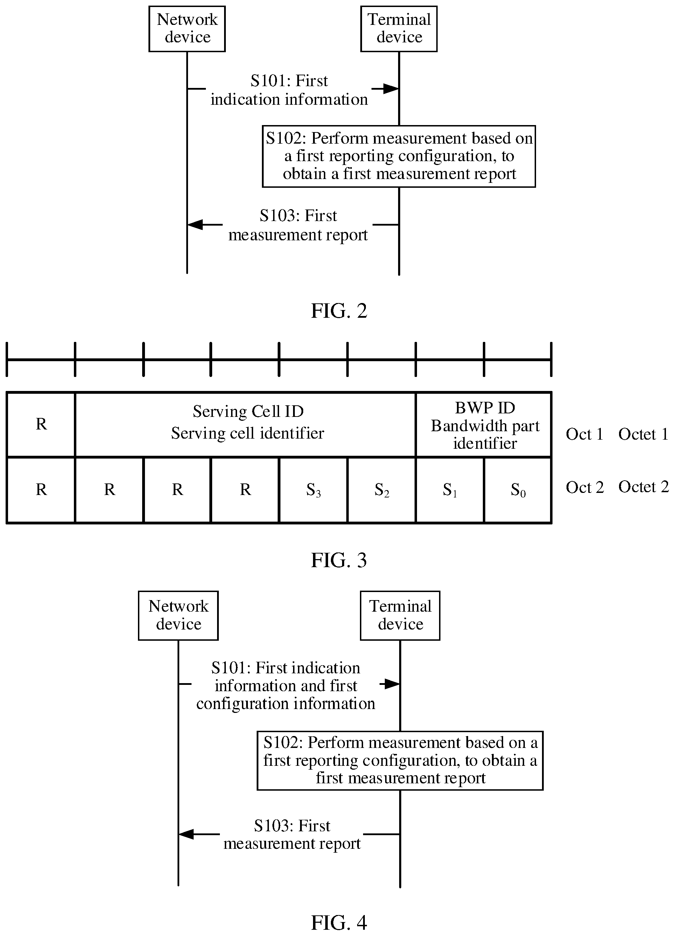

FIG. 2 is a schematic diagram of a communication method according to an embodiment of this application. The method includes the following steps.

S101: A network device sends first indication information.

In this embodiment, the network device sends the first indication information to a terminal device in step S101. Correspondingly, the terminal device receives the first indication information from the network device in step S 101. The first indication information indicates that a first beam associated with at least one RS corresponding to a first reporting configuration is for beam switching.

Optionally, a type of the first reporting configuration is a layer 1 (layer 1, L1) reporting configuration. Correspondingly, the first indication information sent by the network device in step S101 indicates that the first beam associated with the at least one RS corresponding to the layer 1 reporting configuration is for beam switching.

Optionally, a beam that is between the network device and the terminal device and that is for receiving and sending the first indication information in step S101 is denoted as a current communication beam. Alternatively, the first reporting configuration may be event reporting based on L1 measurement, and beam switching is triggered after one or more of the following events are satisfied.

First event: Measured quality of the first beam is greater than (or equal to) a sum of an offset value and a threshold.

Second event: Measured quality of the current communication beam is less than (or equal to) a sum of an offset value and a threshold.

Third event: Measured quality of the first beam is greater than (or equal to) a sum of an offset value and quality of the current communication beam.

Optionally, the quality of the first beam (or a second beam) may be an RSRP, reference signal received quality (reference signal received quality, RSRQ), or the like. The offset value may be a positive number, a negative number, or 0. The threshold may be a preconfigured threshold (or a threshold configured by the network device).

In addition, a PCI corresponding to the first beam is different from or the same as a PCI corresponding to the current communication beam.

In a possible implementation, the first reporting configuration includes the at least one RS (in other words, the at least one RS is included in the first reporting configuration). Alternatively, the first reporting configuration includes a first RS, and the at least one RS is associated with the first RS (in other words, the at least one RS is associated with the first RS, and the first RS is included in the first reporting configuration). Specifically, in the first indication information sent by the network device in step S101, there are a plurality of implementations for the at least one RS that is indicated by the first indication information and that is associated with the first beam. For example, the at least one RS may be a part of a plurality of RSs included in the first reporting configuration. For another example, the at least one RS may be associated with the part of RSs. This is not limited herein.

Optionally, that the at least one RS is associated with the first RS may be described as that the at least one RS and the first RS are associated with a same TCI state, or may be described as that the at least one RS and the first RS have a QCL relationship.

In a possible implementation, the at least one RS includes a TRS. The TRS is not repeatedly configured, and there is a quasi co-location QCL relationship between the TRS and an SSB.

Optionally, that the TRS is not repeatedly configured means that there is a "repetition (repetition)" field in configuration information corresponding to the TRS and a value of the field is "off (off)", or that there is no "repetition" field in configuration information corresponding to the TRS. Optionally, the terminal device should not assume that the network device sends the TRS by using a same beam.

Optionally, the first indication information indicating that the first beam associated with the at least one RS corresponding to the first reporting configuration is for beam switching may be explicitly configured, or may be implicitly configured. For example, when the at least one RS corresponding to the first reporting configuration includes a TRS, where the TRS is not repeatedly configured, and there is a quasi co-location QCL relationship between the TRS and an SSB, the terminal device may determine that the first beam associated with the TRS is for beam switching. In this case, the network device implicitly configures the first indication information by using the configured QCL relationship between the SSB and the TRS, and the terminal device implicitly determines the first indication information based on the QCL relationship between the SSB and the TRS.

In a possible implementation, the first indication information satisfies at least one of the following:
1. The first indication information includes an identifier of the at least one RS. Subsequently, the terminal device may perform measurement and reporting based on the identifier of the at least one RS in step S102 and step S103.

Optionally, the first indication information further includes a beam identifier corresponding to the identifier of the at least one RS. The beam identifier may be a TCI state ID, a sounding reference signal resource index (sounding reference signal resource index, SRI), or another identifier that indicates, to the terminal device, a spatial filter parameter referred for receiving or sending a signal.

Optionally, the at least one RS may alternatively be a source reference signal (source RS) of a QCL Type D in at least one TCI state. In this case, the terminal uses, as the first beam, a beam associated with the TCI state.

2. The first indication information includes an identifier of the first reporting configuration. For example, the first reporting configuration may be a channel reference signal report configuration (CSI-ReportConfig) configured by the network device. When the first indication information includes a channel reference signal report configuration identifier (CSI-ReportConfigID), the first indication information specifically indicates that a first beam associated with at least one RS corresponding to a reporting configuration indicated by the CSI-ReportConfigID is for beam switching.

3. The first reporting configuration is included in a CSI resource list that is configured based on semi-persistence, and the first indication information further indicates to activate the first reporting configuration in the CSI resource list.

For example, FIG. 3 shows a CSI resource list that is delivered by the network device to the terminal device in an RRC configuration manner and that is configured based on semi-persistence SP. The CSI resource list includes a plurality of measurement configurations (S₀, S₁, S₂, and S₃) that are for semi-persistent reporting. Each measurement configuration thereof is separately associated with one or more TCI states. In addition, as shown in FIG. 3, the network device may further send a MAC-CE to the terminal device to activate one or more of S₀, S₁, S₂, and S₃, and the activated one or more of S₀, S₁, S₂, and S₃ correspond to one or more measurement reporting configurations with SP reporting configuration IDs that are configured based on RRC and that are arranged in ascending order. When the network device indicates, by using the first indication information (where for example, the first indication information is a MAC-CE), to activate the one or more of S₀, S₁, S₂, and S₃, the first indication information further indicates that a first beam associated with at least one RS corresponding to the activated TCI state is for beam switching.

4. The first indication information includes an identifier of a first TCI state associated with the first reporting configuration.

For example, when the network device delivers configuration information of the first reporting configuration, the configuration information includes an association relationship between the reporting configuration and a TCI state ID. Optionally, the configuration information may be indicated by using RRC or a MAC-CE. For example, the network device may configure, in the configuration information, that a reporting configuration ID #1 (namely, the first reporting configuration) corresponds to a TCI state #2. When the terminal device performs reporting based on the reporting configuration ID #1, optionally, the terminal device may use a beam corresponding to the TCI state #2 as a new serving beam (namely, the first beam), to receive a PDCCH signal and/or a PDSCH signal.

5. The first reporting configuration is included in a trigger state list, and the first indication information indicates an identifier of the first reporting configuration in the trigger state list.

For example, when the network device delivers configuration information of the first reporting configuration, the configuration information is for associating at least one measurement reporting configuration with at least one TCI state ID, and add the at least one measurement reporting configuration and the at least one TCI state ID to a same trigger state list (trigger state list) (where for example, the trigger state list is a configuration list for triggering CSI reporting by using DCI). When the network device sends DCI to trigger the terminal device to perform aperiodic CSI measurement and reporting, the terminal device determines a to-be-switched beam based on the TCI state ID that is pre-associated in the configuration information. For example, a beam corresponding to the associated TCI state ID is used as a new serving beam (namely, the first beam), to receive a PDCCH signal and/or a PDSCH signal.

Optionally, if resources to which a plurality of measurement reporting configurations in the trigger state list belong respectively belong to different CCs, when a measurement result of the first reporting configuration satisfies a condition, the terminal device separately uses, on the plurality of CCs based on an association relationship preconfigured by using the configuration information, beams indicated by corresponding TCIs.

Optionally, if a plurality of measurement resources in the trigger state list are preconfigured to be associated with a control resource pool identifier (control resource set pool ID, CORESET pool ID), when a measurement result of the first reporting configuration satisfies a condition, when receiving a plurality of PDCCHs, the terminal device separately uses, as new serving beams (namely, the first beams), beams indicated by corresponding TCI state IDs in the control resource pool.

Specifically, the first indication information that is sent by the network device in step S101 and that indicates that the first beam associated with the at least one RS corresponding to the first reporting configuration is for beam switching may indicate, in the foregoing plurality of manners, that a beam for beam switching is the first beam.

Optionally, the terminal device may determine, based on a configuration of the network device, that the first indication information satisfies at least one of the foregoing items. Alternatively, the terminal device determines, in a preconfigured manner, that the first indication information satisfies at least one of the foregoing items. This is not limited herein. In addition, when the terminal device determines, based on the configuration of the network device, that the first indication information satisfies at least one of the foregoing items, the configuration of the network device and the first indication information may be carried in a same message, or may be carried in different messages. This is not limited herein.

S102: The terminal device performs measurement based on the first reporting configuration, to obtain a first measurement report.

In this embodiment, in step S102, the terminal device performs measurement based on the first reporting configuration that corresponds to the first indication information and that is obtained in step S101, and generates the first measurement report based on a measurement result.

In a possible implementation, after the terminal device performs measurement based on the first reporting configuration in step S 102 to obtain the first measurement report, the terminal device may determine, without another condition, that the first beam associated with the first reporting configuration is for beam switching. In addition, after step S102, the terminal device may communicate with the network device based on the first beam (immediately or after a delay).

In a possible implementation, after the terminal device performs measurement based on the first reporting configuration in step S102 to obtain the first measurement report, the terminal device further needs to determine, when at least one of the following is satisfied, that the first beam associated with the first reporting configuration is for beam switching includes:
an RSRP of the at least one RS is greater than a first threshold;
an SINR of the at least one RS is greater than a second threshold;
a TCI state associated with the at least one RS is an activated TCI state;
the first reporting configuration is configuration information configured in a periodic manner;
the first reporting configuration is configuration information configured in a semi-persistence (semi-persistence, SP) manner;
the first reporting configuration is configuration information configured in an aperiodic configuration manner; or
the first reporting configuration is configuration information configured based on a TRS that is aperiodically configured.

Specifically, the first beam indicated by the first indication information that is sent by the network device in step S101 is not necessarily for beam switching, and may be further limited by any one or more of the foregoing conditions, to ensure that the first beam is a beam that satisfies a condition and that is obtained by the terminal device through measurement, or ensure that the first beam is a beam corresponding to a condition configured by the network device.

Optionally, when the terminal device determines, based on a configuration of the network device, that at least one of the foregoing conditions is satisfied, the first beam associated with the first reporting configuration is for beam switching. Alternatively, when the terminal device determines, in a preconfigured manner, that at least one of the foregoing conditions is satisfied, the first beam associated with the first reporting configuration is for beam switching. This is not limited herein. In addition, when the terminal device determines, based on the configuration of the network device, that at least one of the foregoing items is satisfied, the configuration of the network device and the first indication information may be carried in a same message, or may be carried in different messages. This is not limited herein.

In a possible implementation, before the terminal device performs measurement based on the first reporting configuration, to obtain the first measurement report, the method further includes: The terminal device receives, from the network device, configuration information of the first reporting configuration.

In an implementation, the configuration information of the first reporting configuration and the first indication information in step S101 are carried in a same message, as shown in FIG. 4. The network device may send both the first indication information and the configuration information of the first reporting configuration by using one message sent in step S101.

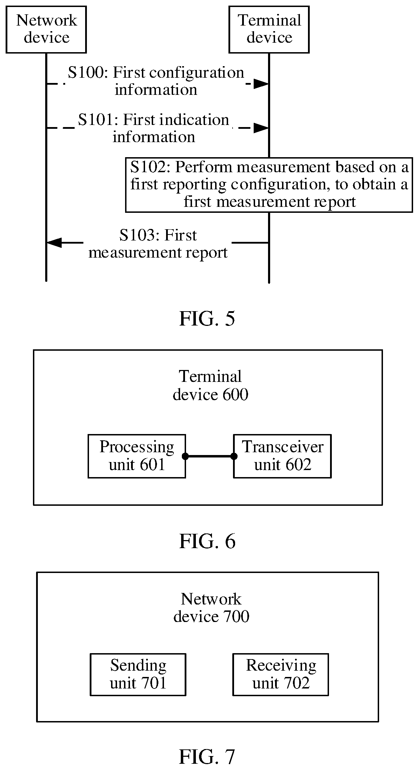

In another implementation, the configuration information of the first reporting configuration and the first indication information in step S101 are carried in different messages, as shown in FIG. 5. The network device may separately send the configuration information of the first reporting configuration in step S100, and send the first indication information in step S101.

It should be noted that, during actual application, an execution sequence of step S100 and step S101 shown in FIG. 5 is not limited, that is, step S100 may be performed before step S101, or step S100 may be performed after step S 101. This is not limited herein.

In a possible implementation, the configuration information of the first reporting configuration includes at least one of the following:

TCI state identifier: indicating a TCI state associated with the first reporting configuration. For example, a currently measured beam (indicated by the at least one RS) is A, and a TCI state ID included in the reporting configuration is B that indicates the first beam to be switched. For example, in RSs reported in the first reporting configuration, if an RS A satisfies a condition, a beam whose TCI state ID is B is used as the first beam.

Physical cell identifier (physical cell identifier, PCI): indicating a physical cell corresponding to the first beam. For example, the configuration further includes a PCI, and the PCI indicates a target cell of the first beam.

First field: when a value of the first field is a first preset value, the first field indicates that the first beam is allowed to be for beam switching. For example, the network device adds a field to the first reporting configuration, to explicitly indicate that the first reporting configuration can be for triggering beam switching. For example, when a field "beam switch (beam switch) (or referred to as beam adjustment, switching a beam, or the like)" is added to the first reporting configuration as the first field, and a value configured for the field is enable (enable) (or the value is a specific value such as "1", "0", "11", or "111"), it indicates that the first reporting configuration can be for beam switching.

Second field: when a value of the second field is a second preset value, the second field indicates that the first beam is for beam switching of a plurality of carriers CCs. For example, indication information indicating that a carrier (component carrier, CC) group takes effect may be further included, to indicate whether beam switching reported based on the first reporting configuration is applied to the plurality of CCs. Optionally, the carrier may alternatively carry a serving cell (serving cell).

Based on the foregoing technical solution, the configuration information that is of the first reporting configuration and that is delivered by the network device may further include at least one piece of the foregoing information, so that, in a process of performing beam switching based on the first beam, the terminal device can further improve the beam switching process by using the at least one piece of the foregoing information.

It should be noted that when the configuration information of the first reporting configuration includes the first field, before step S102, the network device may send one of the first field and the first indication information to the terminal device, or may send the first field and the first indication information to the terminal device. The following uses an example shown in FIG. 5 for description.

For example, when the network device sends the first field to the terminal device but does not send the first indication information before step S102, the network device and the terminal device perform step S100 shown in FIG. 5 but do not perform step S101. For example, the network device indicates, by using the first field carried in the first configuration information in step S100, that the first beam can be for beam switching, so that the terminal device can determine, based on the first field (without an indication of the first indication information), that the first beam is for beam switching.

For another example, when the network device sends the first indication information to the terminal device but does not send the first field before step S102, the network device and the terminal device perform step S101 shown in FIG. 5 but do not perform step S100. For example, the network device indicates, by using the first indication information in step S101, that the first beam is for beam switching, so that the terminal device can determine, based on the first indication information (without an indication of the first field), that the first beam is for beam switching.

For another example, when the network device sends the first indication information and the first field to the terminal device before step S102, the network device and the terminal device perform step S101 shown in FIG. 5 and step S100. For example, the network device indicates, by using the first field carried in the first configuration information in step S100, that the first beam (and another beam that may exist) can be for beam switching, so that the terminal device determines that the first beam (and the another beam that may exist) can be for beam switching. Then, the network device indicates, by using the first indication information in step S101, that the first beam (the first beam and another beam that may exist) is for beam switching, so that the terminal device determines, based on the first field and the first indication information, a beam for beam switching as the first beam.

Optionally, the first preset value and the second preset value may be a same value, or may be different values. This is not limited herein. In addition, when the configuration information of the first reporting configuration includes both the first field and the second field, the first field and the second field may be separately carried by using separate bit information, or both the first field and the second field may be indicated by using joint bit information. This is not limited herein.

Optionally, a beam that is between the network device and the terminal device and that is for receiving and sending the first indication information in step S101 is denoted as a current communication beam. A PCI corresponding to the current communication beam may be the same as or different from a PCI corresponding to the first beam.

In addition, the PCI corresponding to the first beam may be indicated in an explicit manner. For example, the configuration information of the first reporting configuration includes the PCI. The PCI corresponding to the first beam may be indicated in an implicit manner. For example, when the configuration information of the first reporting configuration includes the TCI state identifier, a PCI associated with the TCI state identifier is the PCI corresponding to the first beam. For another example, when the configuration information of the first reporting configuration includes the second field, a PCI associated with the CC group is the PCI corresponding to the first beam. For another example, when one or more identifiers (the identifier of the at least one RS, the identifier of the first reporting configuration, the CSI resource list that is configured based on the semi-persistence, and the like) included in the first indication information in step S101 are used, a PCI associated with the one or more identifiers is the PCI corresponding to the first beam.

Optionally, when the configuration information of the first reporting configuration includes the TCI state identifier, a PCI corresponding to a reference source reference signal (source RS) configuration that is of a QCL Type-D of a TCI state corresponding to the TCI state identifier is the PCI corresponding to the first beam.

In a possible implementation, the configuration information of the first reporting configuration is carried in second DCI. The second DCI is for scheduling data on a physical uplink data channel PUSCH. Specifically, the configuration information of the first reporting configuration included in the configuration information that is of the first reporting configuration and that is delivered by the network device may be specifically carried in DCI (for example, the second DCI), and a specific manner of carrying the configuration information of the first reporting configuration is provided.

Optionally, the first indication information indicating that the first beam associated with the at least one RS corresponding to the first reporting configuration is for beam switching may be explicitly configured, or may be implicitly configured. For example, when the configuration information of the first reporting configuration may be specifically carried in DCI (for example, the second DCI) and the second DCI is for scheduling the data on the PUSCH, the second DCI may be DCI (DCI 0_2) in a format 0_2. In this case, the network device implicitly configures the first indication information by using the second DCI, and the terminal device implicitly determines the first indication information based on the received second DCI.

S103: The terminal device sends the first measurement report.

In this embodiment, the terminal device sends the first measurement report to the network device in step S103. Correspondingly, the network device receives the first measurement report from the terminal device in step S103.

In a possible implementation, the method further includes: The terminal device sends first capability information to the network device. The first capability information indicates effective duration of the first beam.

Optionally, the first capability information and the first measurement report in step S103 are carried in a same message.

Optionally, the first capability information and the first measurement report are carried in different messages. For example, the terminal device may send the first capability information to the network device before sending the first measurement report to the network device in step S103. For another example, the terminal device may send the first capability information to the network device after sending the first measurement report to the network device in step S103. For another example, the terminal device may send the first capability information to the network device before receiving the first indication information in step S101. For another example, the terminal device may send the first capability information to the network device after receiving the first indication information in step S101.

Specifically, limited by a communication delay, a radio frequency adjustment delay, or the like, the terminal device may further send, to the network device, the first capability information that indicates the effective duration of the first beam, so that the network device determines the effective duration of the first beam based on the first capability information, and communicates with the terminal device based on the first beam after an effective moment corresponding to the effective duration of the first beam.

Further, before the effective moment corresponding to the effective duration of the first beam, the method further includes: The terminal device receives second TCI state information from the network device. A second beam corresponding to an RS indicated by the second TCI state information is for beam switching. Then, the terminal device receives downlink data based on the second beam. Specifically, before the effective moment indicated by the effective duration of the first beam, the terminal device can further receive the downlink data based on the second beam corresponding to the RS indicated by the second TCI state information sent by the network device. That is, the terminal device receives the downlink data from the network device based on the second beam temporarily/newly configured by the network device, to improve flexibility of implementing the solution.

Optionally, the terminal device may further determine, in a preconfigured manner or a manner configured by the network device, effective duration of the second beam corresponding to the RS indicated by the second TCI state information.

Optionally, the terminal device may further compare the effective duration of the first beam with the effective duration of the second beam, to determine whether the beam to be switched is the first beam or the second beam. For example, in time domain, if the effective moment corresponding to the effective duration of the first beam is earlier than an effective moment corresponding to the effective duration of the second beam, the terminal device determines, after step S103, to use the first beam as a beam for communicating with the network device. If the effective moment corresponding to the effective duration of the first beam is later than the effective moment corresponding to the effective duration of the second beam, the terminal device determines, after step S103, to use the second beam as the beam for communicating with the network device.

In a possible implementation, after the terminal device sends the first measurement report to the network device in step S103, the method further includes: The terminal device receives second indication information from the network device, where the second indication information indicates that a beam indicated by the first measurement report takes effect. Alternatively, the terminal device receives third indication information from the network device, where the third indication information indicates that the first measurement report takes effect after first duration. Alternatively, the terminal device receives a first DCI message from the network device, where the first DCI message indicates that the first beam indicated by the first measurement report takes effect after second duration.

Specifically, after the terminal device sends the first measurement report to the network device in step S103, the network device may further indicate, by using the foregoing plurality of implementations, the effective moment at which the terminal device performs beam switching based on the first beam corresponding to the first measurement report. Therefore, the terminal device determines the effective moment of the first beam based on an indication of the network device, and performs beam switching based on the effective moment of the first beam.

Based on the foregoing technical solution, the first indication information received by the terminal device from the network device indicates that the first beam associated with the at least one RS corresponding to the first reporting configuration is for beam switching. Then, after the terminal device performs beam measurement based on the first reporting configuration, and obtains and reports the first measurement report, the terminal device determines that the first beam can be for beam switching. In comparison with an implementation in which there is a high communication delay in a conventional beam management process, after the network device indicates, in advance based on the first indication information, that the first beam is for beam switching, and the terminal device reports the first measurement report corresponding to the first beam, the terminal device can determine, without waiting for a beam management instruction delivered by the network device, that the first beam can be for beam switching, so that a delay in a beam management process can be reduced, thereby improving communication quality.

The foregoing describes this application from a perspective of methods, and the following further describes this application from a perspective of apparatuses.

FIG. 6 is a schematic diagram of a terminal device 600 according to an embodiment of this application. The terminal device 600 includes a processing unit 601 and a transceiver unit 602.

The transceiver unit is configured to receive first indication information from a network device. The first indication information indicates that a first beam associated with at least one reference signal RS corresponding to a first reporting configuration is for beam switching.

The processing unit is configured to perform measurement based on the first reporting configuration, to obtain a first measurement report.

The transceiver unit is further configured to send the first measurement report to the network device.

In a possible implementation:
The first reporting configuration includes the at least one RS (in other words, the at least one RS is included in the first reporting configuration). Alternatively, the first reporting configuration includes a first RS, and the at least one RS is associated with the first RS (in other words, the at least one RS is associated with the first RS, and the first RS is included in the first reporting configuration).

In a possible implementation, the first indication information satisfies at least one of the following:
the first indication information includes an identifier of the at least one RS;
the first indication information includes an identifier of the first reporting configuration;
the first reporting configuration is included in a CSI resource list that is configured based on semi-persistence SP, and the first indication information further indicates to activate the first reporting configuration in the CSI resource list;
the first indication information includes an identifier of a first TCI state associated with the first reporting configuration; or
the first reporting configuration is included in a trigger state list, and the first indication information indicates an identifier of the first reporting configuration in the trigger state list.

In a possible implementation, when at least one of the following is satisfied, that the first beam associated with the first reporting configuration is for beam switching includes:
a reference signal received power RSRP of the at least one RS is greater than a first threshold;
a signal to interference plus noise ratio SINR of the at least one RS is greater than a second threshold;
a TCI state associated with the at least one RS is an activated TCI state;
the first reporting configuration is configuration information configured in a periodic manner;
the first reporting configuration is configuration information configured in a semi-persistence manner;
the first reporting configuration is configuration information configured in an aperiodic configuration manner; or
the first reporting configuration is configuration information configured based on a TRS that is aperiodically configured.

In a possible implementation:
The transceiver unit is further configured to send first capability information to the network device, where the first capability information indicates effective duration of the first beam.

In a possible implementation, before an effective moment corresponding to the effective duration of the first beam:
The transceiver unit is further configured to receive second TCI state information from the network device, where a second beam corresponding to an RS indicated by the second TCI state information is for beam switching.

The processing unit is further configured to receive downlink data based on the second beam.

In a possible implementation:
The transceiver unit is further used for second indication information from the network device, where the second indication information indicates that a beam indicated by the first measurement report takes effect.

Alternatively, the transceiver unit is further used for third indication information from the network device, where the third indication information indicates that the first measurement report takes effect after first duration.

Alternatively, the transceiver unit is further used for a first downlink control information DCI message from the network device, where the first DCI message indicates that the first measurement report takes effect after second duration.

In a possible implementation:
The transceiver unit is further configured to receive, from the network device, configuration information of the first reporting configuration.

In a possible implementation, the configuration information of the first reporting configuration includes at least one of the following:
a TCI state identifier, indicating a TCI state associated with the first reporting configuration;
a physical cell identifier PCI, indicating a physical cell corresponding to the first beam;
a first field, where when a value of the first field is a first preset value, the first field indicates that the first beam is allowed to be for beam switching; or
a second field, where when a value of the second field is a second preset value, the second field indicates that the first beam is for beam switching of a plurality of carriers CCs.

In a possible implementation, the configuration information of the first reporting configuration is carried in second DCI. The second DCI is for scheduling data on a physical uplink data channel PUSCH.

In a possible implementation, the configuration information of the first reporting configuration and the first indication information are carried in a same message.

In a possible implementation, the at least one RS includes a tracking reference signal TRS. The TRS is not repeatedly configured, and there is a quasi co-location QCL relationship between the TRS and a first synchronization signal block SSB.

It should be noted that, for content such as an information execution process of the unit of the terminal device 600, refer to the descriptions in the method embodiments in this application. Details are not described herein again.

FIG. 7 is a schematic diagram of a network device 700 according to an embodiment of this application. The network device 700 includes a sending unit 701 and a receiving unit 702.

The sending unit 701 is configured to send first indication information to a terminal device. The first indication information indicates that a first beam associated with at least one reference signal RS corresponding to a first reporting configuration is for beam switching.

The receiving unit 702 is configured to receive a first measurement report from the terminal device. The first measurement report is a measurement result of the first reporting configuration.

In a possible implementation:
The first reporting configuration includes the at least one RS (in other words, the at least one RS is included in the first reporting configuration). Alternatively, the first reporting configuration includes a first RS, and the at least one RS is associated with the first RS (in other words, the at least one RS is associated with the first RS, and the first RS is included in the first reporting configuration).

In a possible implementation, the first indication information satisfies at least one of the following:
the first indication information includes an identifier of the at least one RS;
the first indication information includes an identifier of the first reporting configuration;
the first reporting configuration is included in a CSI resource list that is configured based on semi-persistence SP, and the first indication information further indicates to activate the first reporting configuration in the CSI resource list; or
the first indication information includes an identifier of a first TCI state associated with the first reporting configuration.

In a possible implementation, when at least one of the following is satisfied, that the first beam associated with the first reporting configuration is for beam switching includes:
a reference signal received power RSRP of the at least one RS is greater than a first threshold;
a signal to interference plus noise ratio SINR of the at least one RS is greater than a second threshold;
a TCI state associated with the at least one RS is an activated TCI state;
the first reporting configuration is configuration information configured in a periodic manner;
the first reporting configuration is configuration information configured in a semi-persistence manner;
the first reporting configuration is configuration information configured in an aperiodic configuration manner; or
the first reporting configuration is configuration information configured based on a TRS that is aperiodically configured.

In a possible implementation:
The receiving unit is further configured to receive first capability information from the terminal device. The first capability information indicates effective duration of the first beam.

In a possible implementation, before an effective moment corresponding to the effective duration of the first beam:
The receiving unit is further configured to receive second TCI state information from the network device, where a second beam corresponding to an RS indicated by the second TCI state information is for beam switching.

The sending unit is further configured to send downlink data based on the second beam.

In a possible implementation:
The sending unit is further configured to send second indication information to the terminal device, where the second indication information indicates that a beam indicated by the first measurement report takes effect.

Alternatively, the sending unit is further configured to send third indication information to the terminal device, where the third indication information indicates that the first measurement report takes effect after first duration.

Alternatively, the sending unit is further configured to send a first downlink control information DCI message to the terminal device, where the first DCI message indicates that the first measurement report takes effect after second duration.

In a possible implementation:
The sending unit is further configured to send, to the terminal device, configuration information of the first reporting configuration.

In a possible implementation, the configuration information of the first reporting configuration includes at least one of the following:
a TCI state identifier, indicating a TCI state associated with the first reporting configuration;
a physical cell identifier PCI, indicating a physical cell corresponding to the first beam;
a first field, where when a value of the first field is a first preset value, the first field indicates that the first beam is allowed to be for beam switching; or
a second field, where when a value of the second field is a second preset value, the second field indicates that the first beam is for beam switching of a plurality of carriers CCs.

In a possible implementation, the configuration information of the first reporting configuration is carried in second DCI. The second DCI is for scheduling data on a physical uplink data channel PUSCH.

In a possible implementation, the configuration information of the first reporting configuration and the first indication information are carried in a same message.

In a possible implementation, the at least one RS includes a tracking reference signal TRS. The TRS is not repeatedly configured, and there is a quasi co-location QCL relationship between the TRS and a first synchronization signal block SSB.

It should be noted that, for content such as an information execution process of the unit of the network device 700, refer to the descriptions in the method embodiments in this application. Details are not described herein again.

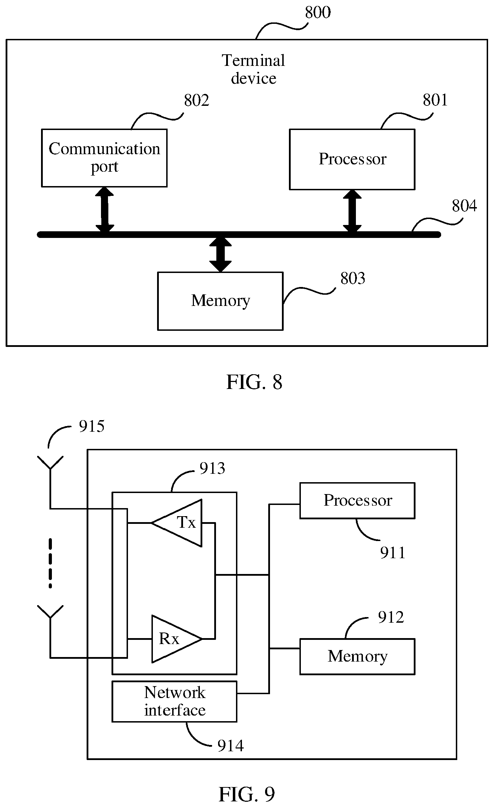

FIG. 8 is a schematic diagram of a terminal device in the foregoing embodiments according to an embodiment of this application. In a schematic diagram of a possible logical structure of the terminal device 800, the terminal device 800 may include but is not limited to at least one processor 801 and a communication port 802. Further, optionally, the apparatus may further include at least one of a memory 803 and a bus 804. In this embodiment of this application, the at least one processor 801 is configured to control an action of the terminal device 800.

In addition, the processor 801 may be a central processing unit, a general-purpose processor, a digital signal processor, an application-specific integrated circuit, a field programmable gate array, another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the terminal device shown in FIG. 8 may be specifically configured to implement other steps implemented by the terminal device in the foregoing corresponding method embodiments, and implement technical effects corresponding to the terminal device. For specific implementations of the terminal device shown in FIG. 8, refer to the descriptions in the foregoing method embodiments. Details are not described herein again.

FIG. 9 is a schematic diagram of a network device in the foregoing embodiments according to an embodiment of this application. For a structure of the network device, refer to the structure shown in FIG. 9.

The network device includes at least one processor 911 and at least one network interface 914. Further, optionally, the network device further includes at least one memory 912, at least one transceiver 913, and one or more antennas 915. The processor 911, the memory 912, the transceiver 913, and the network interface 914 are connected, for example, by using a bus. In this embodiment of this application, the connection may include various interfaces, transmission lines, buses, or the like. This is not limited in this embodiment. The antennas 915 are connected to the transceiver 913. The network interface 914 is configured to enable the network device to communicate with another communication device through a communication link. For example, the network interface 914 may include a network interface between the network device and a core network device, for example, an S 1 interface. The network interface may include a network interface between the network device and another communication apparatus (for example, another access network device or a core network device), for example, an X2 or Xn interface.

The processor 911 is mainly configured to process a communication protocol and communication data, control the entire network device, execute a software program, and process data of the software program, for example, is configured to support the network device in performing actions described in embodiments. The network device may include a baseband processor and a central processing unit. The baseband processor is mainly configured to process the communication protocol and the communication data. The central processing unit is mainly configured to control the entire terminal device, execute the software program, and process the data of the software program. The processor 911 in FIG. 9 may integrate functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 912 may exist independently, and is connected to the processor 911. Optionally, the memory 912 may be integrated with the processor 911, for example, integrated into a chip. The memory 912 can store program code for executing the technical solutions in embodiments of this application, and the processor 911 controls the execution. Various types of executed computer program code may also be considered as drivers of the processor 911.

FIG. 9 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 913 may be configured to support receiving or sending of a radio frequency signal between the network device and a terminal, and the transceiver 913 may be connected to the antenna 915. The transceiver 913 includes a transmitter Tx and a receiver Rx. Specifically, the one or more antennas 915 may receive the radio frequency signal. The receiver Rx of the transceiver 913 is configured to: receive the radio frequency signal from the antennas, convert the radio frequency signal into a digital baseband signal or a digital intermediate frequency signal, and provide the digital baseband signal or the digital intermediate frequency signal for the processor 911, so that the processor 911 further processes the digital baseband signal or the digital intermediate frequency signal, for example, performs demodulation processing and decoding processing. In addition, the transmitter Tx of the transceiver 913 is further configured to: receive a modulated digital baseband signal or a modulated digital intermediate frequency signal from the processor 911, convert the modulated digital baseband signal or the digital intermediate frequency signal into a radio frequency signal, and send the radio frequency signal through the one or more antennas 915. Specifically, the receiver Rx may selectively perform one-level or multi-level down-conversion mixing and analog-to-digital conversion on the radio frequency signal, to obtain the digital baseband signal or the digital intermediate frequency signal. A sequence of the down-conversion mixing and the analog-to-digital conversion may be adjusted. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital medium-frequency signal may be collectively referred to as a digital signal.

The transceiver may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver, an input port, a receiving circuit, or the like. The sending unit may be referred to as a transmitter machine, a transmitter, a transmission circuit, or the like.

It should be noted that the network device shown in FIG. 9 may be specifically configured to implement steps implemented by the network device in the foregoing method embodiments, and implement technical effects corresponding to the network device. For specific implementations of the network device shown in FIG. 9, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) that stores one or more computers. When the computer program product is executed by a processor, the processor performs the method in the possible implementations of the terminal device.

An embodiment of this application further provides a computer program product that stores one or more computers. When the computer program product is executed by a processor, the processor performs the method in the possible implementations of the network device.

An embodiment of this application further provides a chip system. The chip system includes at least one processor, configured to support a terminal device in implementing functions in any possible implementation corresponding to the terminal device. Optionally, the chip system further includes an interface circuit, and the interface circuit provides program instructions and/or data for the at least one processor. In a possible design, the chip system may further include a memory. The memory is configured to store the program instructions and the data that are necessary for the terminal device. The chip system may include a chip, or may include a chip and another discrete component.

An embodiment of this application further provides a chip system. The chip system includes at least one processor, configured to support a network device in implementing functions in any possible implementation corresponding to the network device. Optionally, the chip system further includes an interface circuit, and the interface circuit provides program instructions and/or data for the at least one processor. In a possible design, the chip system may further include a memory. The memory is configured to store the program instructions and the data that are necessary for the network device. The chip system may include a chip, or may include a chip and another discrete component. The network device may be specifically the network device in the foregoing method embodiments.

An embodiment of this application further provides a communication system. The network system architecture includes the communication apparatus (including the terminal device and the network device) in any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, a part that essentially contributes in the technical solutions of this application, or all or a part of the technical solutions of this application may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of embodiments of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, comprising:
receiving, by a terminal device, first indication information from a network device, wherein the first indication information indicates that a first beam associated with at least one reference signal RS corresponding to a first reporting configuration is for beam switching;
performing, by the terminal device, measurement based on the first reporting configuration, to obtain a first measurement report; and
sending, by the terminal device, the first measurement report to the network device.

2. The method according to claim 1, wherein
the first reporting configuration comprises the at least one RS; or
the first reporting configuration comprises a first RS, and the at least one RS is associated with the first RS.

3. The method according to claim 1 or 2, wherein the first indication information satisfies at least one of the following:
the first indication information comprises an identifier of the at least one RS;
the first indication information comprises an identifier of the first reporting configuration;
the first reporting configuration is comprised in a CSI resource list that is configured based on semi-persistence SP, and the first indication information further indicates to activate the first reporting configuration in the CSI resource list;
the first indication information comprises an identifier of a first transmission configuration indicator state TCI state associated with the first reporting configuration; or
the first reporting configuration is comprised in a trigger state list, and the first indication information indicates an identifier of the first reporting configuration in the trigger state list.

4. The method according to any one of claims 1 to 3, wherein when at least one of the following is satisfied, that the first beam associated with the first reporting configuration is for beam switching comprises:
a reference signal received power RSRP of the at least one RS is greater than a first threshold;
a signal to interference plus noise ratio SINR of the at least one RS is greater than a second threshold;
a TCI state associated with the at least one RS is an activated TCI state;
the first reporting configuration is configuration information configured in a periodic manner;
the first reporting configuration is configuration information configured in a semi-persistence manner; or
the first reporting configuration is configuration information configured in an aperiodic configuration manner.

5. The method according to any one of claims 1 to 4, wherein the method further comprises:
sending, by the terminal device, first capability information to the network device, wherein the first capability information indicates effective duration of the first beam.

6. The method according to claim 5, wherein before an effective moment corresponding to the effective duration of the first beam, the method further comprises:
receiving, by the terminal device, second TCI state information from the network device, wherein a second beam corresponding to an RS indicated by the second TCI state information is for beam switching; and
receiving, by the terminal device, downlink data based on the second beam.

7. The method according to any one of claims 1 to 6, wherein after the sending, by the terminal device, the first measurement report to the network device, the method further comprises:
receiving, by the terminal device, second indication information from the network device, wherein the second indication information indicates that a beam indicated by the first measurement report takes effect;
receiving, by the terminal device, third indication information from the network device, wherein the third indication information indicates that the first measurement report takes effect after first duration; or
receiving, by the terminal device, a first downlink control information DCI message from the network device, wherein the first DCI message indicates that the first measurement report takes effect after second duration.

8. The method according to any one of claims 1 to 7, wherein before the performing, by the terminal device, measurement based on the first reporting configuration, to obtain a first measurement report, the method further comprises:
receiving, by the terminal device from the network device, configuration information of the first reporting configuration.

9. The method according to claim 8, wherein the configuration information of the first reporting configuration comprises at least one of the following:
a TCI state identifier, indicating a TCI state associated with the first reporting configuration;
a physical cell identifier PCI, indicating a physical cell corresponding to the first beam;
a first field, wherein when a value of the first field is a first preset value, the first field indicates that the first beam is allowed to be for beam switching; or
a second field, wherein when a value of the second field is a second preset value, the second field indicates that the first beam is for beam switching of a plurality of carriers CCs.

10. The method according to claim 8 or 9, wherein the configuration information of the first reporting configuration is carried in second DCI, and the second DCI is for scheduling data on a physical uplink data channel PUSCH.

11. The method according to any one of claims 8 to 10, wherein the configuration information of the first reporting configuration and the first indication information are carried in a same message.

12. The method according to any one of claims 1 to 11, wherein the at least one RS comprises a tracking reference signal TRS, the TRS is not repeatedly configured, and there is a quasi co-location QCL relationship between the TRS and a first synchronization signal block SSB.

13. A communication method, comprising:
sending, by a network device, first indication information to a terminal device, wherein the first indication information indicates that a first beam associated with at least one reference signal RS corresponding to a first reporting configuration is for beam switching; and
receiving, by the network device, a first measurement report from the terminal device, wherein the first measurement report is a measurement result of the first reporting configuration.

14. The method according to claim 13, wherein
the first reporting configuration comprises the at least one RS; or
the first reporting configuration comprises a first RS, and the at least one RS is associated with the first RS.

15. The method according to claim 13 or 14, wherein the first indication information satisfies at least one of the following:
the first indication information comprises an identifier of the at least one RS;
the first indication information comprises an identifier of the first reporting configuration;
the first reporting configuration is comprised in a CSI resource list that is configured based on semi-persistence SP, and the first indication information further indicates to activate the first reporting configuration in the CSI resource list; or
the first indication information comprises an identifier of a first transmission configuration indicator state TCI state associated with the first reporting configuration.

16. The method according to any one of claims 13 to 15, wherein when at least one of the following is satisfied, that the first beam associated with the first reporting configuration is for beam switching comprises:
a reference signal received power RSRP of the at least one RS is greater than a first threshold;
a signal to interference plus noise ratio SINR of the at least one RS is greater than a second threshold;
a TCI state associated with the at least one RS is an activated TCI state;
the first reporting configuration is configuration information configured in a periodic manner;
the first reporting configuration is configuration information configured in a semi-persistence manner; or
the first reporting configuration is configuration information configured in an aperiodic configuration manner.

17. The method according to any one of claims 13 to 16, wherein the method further comprises:
receiving, by the network device, first capability information from the terminal device, wherein the first capability information indicates effective duration of the first beam.

18. The method according to claim 17, wherein before an effective moment corresponding to the effective duration of the first beam, the method further comprises:
sending, by the network device, second TCI state information to the terminal device, wherein a second beam corresponding to an RS indicated by the second TCI state information is for beam switching; and
sending, by the network device, downlink data based on the second beam.

19. The method according to any one of claims 13 to 18, wherein after the receiving, by the network device, a first measurement report from the terminal device, the method further comprises:
sending, by the network device, second indication information to the terminal device, wherein the second indication information indicates that a beam indicated by the first measurement report takes effect;
sending, by the network device, third indication information to the terminal device, wherein the third indication information indicates that the first measurement report takes effect after first duration; or
sending, by the network device, a first downlink control information DCI message to the terminal device, wherein the first DCI message indicates that the first measurement report takes effect after second duration.

20. The method according to any one of claims 13 to 19, wherein before the receiving, by the network device, a first measurement report from the terminal device, the method further comprises:
receiving, by the network device to the terminal device, configuration information of the first reporting configuration.

21. The method according to claim 20, wherein the configuration information of the first reporting configuration comprises at least one of the following:
a TCI state identifier, indicating a TCI state associated with the first reporting configuration;
a physical cell identifier PCI, indicating a physical cell corresponding to the first beam;
a first field, wherein when a value of the first field is a first preset value, the first field indicates that the first beam is allowed to be for beam switching; or
a second field, wherein when a value of the second field is a second preset value, the second field indicates that the first beam is for beam switching of a plurality of carriers CCs.

22. The method according to claim 20 or 21, wherein the configuration information of the first reporting configuration is carried in second DCI, and the second DCI is for scheduling data on a physical uplink data channel PUSCH.

23. The method according to any one of claims 20 to 22, wherein the configuration information of the first reporting configuration and the first indication information are carried in a same message.

24. The method according to any one of claims 13 to 23, wherein the at least one RS comprises a tracking reference signal TRS, the TRS is not repeatedly configured, and there is a quasi co-location QCL relationship between the TRS and a first synchronization signal block SSB.

25. A communication apparatus, comprising a transceiver unit and a processing unit, wherein
the transceiver unit is configured to receive first indication information from a network device, wherein the first indication information indicates that a first beam associated with at least one reference signal RS corresponding to a first reporting configuration is for beam switching;
the processing unit is configured to perform measurement based on the first reporting configuration, to obtain a first measurement report; and
the transceiver unit is further configured to send the first measurement report to the network device.

26. The apparatus according to claim 25, wherein
the first reporting configuration comprises the at least one RS; or
the first reporting configuration comprises a first RS, and the at least one RS is associated with the first RS.

27. The apparatus according to claim 25 or 26, wherein the first indication information satisfies at least one of the following:
the first indication information comprises an identifier of the at least one RS;
the first indication information comprises an identifier of the first reporting configuration;
the first reporting configuration is comprised in a CSI resource list that is configured based on semi-persistence SP, and the first indication information further indicates to activate the first reporting configuration in the CSI resource list; or
the first indication information comprises an identifier of a first transmission configuration indicator state TCI state associated with the first reporting configuration; or
the first reporting configuration is comprised in a trigger state list, and the first indication information indicates an identifier of the first reporting configuration in the trigger state list.

28. The apparatus according to any one of claims 25 to 27, wherein when at least one of the following is satisfied, that the first beam associated with the first reporting configuration is for beam switching comprises:
a reference signal received power RSRP of the at least one RS is greater than a first threshold;
a signal to interference plus noise ratio SINR of the at least one RS is greater than a second threshold;
a TCI state associated with the at least one RS is an activated TCI state;
the first reporting configuration is configuration information configured in a periodic manner;
the first reporting configuration is configuration information configured in a semi-persistence manner; or
the first reporting configuration is configuration information configured in an aperiodic configuration manner.

29. The apparatus according to any one of claims 25 to 28, wherein
the transceiver unit is further configured to send first capability information to the network device, wherein the first capability information indicates effective duration of the first beam.

30. The apparatus according to claim 29, wherein
the transceiver unit is further configured to receive second TCI state information from the network device, wherein a second beam corresponding to an RS indicated by the second TCI state information is for beam switching; and
the transceiver unit receives downlink data based on the second beam.

31. The apparatus according to any one of claims 25 to 30, wherein
the transceiver unit is further configured to receive second indication information from the network device, wherein the second indication information indicates that a beam indicated by the first measurement report takes effect;
the transceiver unit is further configured to receive third indication information from the network device, wherein the third indication information indicates that the first measurement report takes effect after first duration; or
the transceiver unit is further configured to receive a first downlink control information DCI message from the network device, wherein the first DCI message indicates that the first measurement report takes effect after second duration.

32. The apparatus according to any one of claims 25 to 31, wherein
the transceiver unit is further configured to receive, from the network device, configuration information of the first reporting configuration.

33. The apparatus according to claim 32, wherein the configuration information of the first reporting configuration comprises at least one of the following:
a TCI state identifier, indicating a TCI state associated with the first reporting configuration;
a physical cell identifier PCI, indicating a physical cell corresponding to the first beam;
a first field, wherein when a value of the first field is a first preset value, the first field indicates that the first beam is allowed to be for beam switching; or
a second field, wherein when a value of the second field is a second preset value, the second field indicates that the first beam is for beam switching of a plurality of carriers CCs.

34. The apparatus according to claim 32 or 33, wherein the configuration information of the first reporting configuration is carried in second DCI, and the second DCI is for scheduling data on a physical uplink data channel PUSCH.

35. The apparatus according to any one of claims 32 to 34, wherein the configuration information of the first reporting configuration and the first indication information are carried in a same message.

36. The apparatus according to any one of claims 25 to 35, wherein the at least one RS comprises a tracking reference signal TRS, the TRS is not repeatedly configured, and there is a quasi co-location QCL relationship between the TRS and a first synchronization signal block SSB.

37. A communication apparatus, comprising a sending unit and a receiving unit, wherein
the sending unit is configured to send first indication information to a terminal device, wherein the first indication information indicates that a first beam associated with at least one reference signal RS corresponding to a first reporting configuration is for beam switching; and
the receiving unit is configured to receive a first measurement report from the terminal device, wherein the first measurement report is a measurement result of the first reporting configuration.

38. The apparatus according to claim 37, wherein
the first reporting configuration comprises the at least one RS; or
the first reporting configuration comprises a first RS, and the at least one RS is associated with the first RS.

39. The apparatus according to claim 37 or 38, wherein the first indication information satisfies at least one of the following:
the first indication information comprises an identifier of the at least one RS;
the first indication information comprises an identifier of the first reporting configuration;
the first reporting configuration is comprised in a CSI resource list that is configured based on semi-persistence SP, and the first indication information further indicates to activate the first reporting configuration in the CSI resource list; or
the first indication information comprises an identifier of a first transmission configuration indicator state TCI state associated with the first reporting configuration.

40. The apparatus according to any one of claims 37 to 39, wherein when at least one of the following is satisfied, that the first beam associated with the first reporting configuration is for beam switching comprises:
a reference signal received power RSRP of the at least one RS is greater than a first threshold;
a signal to interference plus noise ratio SINR of the at least one RS is greater than a second threshold;
a TCI state associated with the at least one RS is an activated TCI state;
the first reporting configuration is configuration information configured in a periodic manner;
the first reporting configuration is configuration information configured in a semi-persistence manner; or
the first reporting configuration is configuration information configured in an aperiodic configuration manner.

41. The apparatus according to any one of claims 37 to 40, wherein
the receiving unit is further configured to receive first capability information from the terminal device, wherein the first capability information indicates effective duration of the first beam.

42. The apparatus according to claim 41, wherein
the sending unit is further configured to send second TCI state information to the terminal device, wherein a second beam corresponding to an RS indicated by the second TCI state information is for beam switching; and
the sending unit is further configured to send downlink data based on the second beam.

43. The apparatus according to any one of claims 37 to 42, wherein
the sending unit is further configured to send second indication information to the terminal device, wherein the second indication information indicates that a beam indicated by the first measurement report takes effect;
the sending unit is further configured to send third indication information to the terminal device, wherein the third indication information indicates that the first measurement report takes effect after first duration; or
the sending unit is further configured to send a first downlink control information DCI message to the terminal device, wherein the first DCI message indicates that the first measurement report takes effect after second duration.

44. The apparatus according to any one of claims 37 to 43, wherein
the sending unit is further configured to send, to the terminal device, configuration information of the first reporting configuration.

45. The apparatus according to claim 44, wherein the configuration information of the first reporting configuration comprises at least one of the following:
a TCI state identifier, indicating a TCI state associated with the first reporting configuration;
a physical cell identifier PCI, indicating a physical cell corresponding to the first beam;
a first field, wherein when a value of the first field is a first preset value, the first field indicates that the first beam is allowed to be for beam switching; or
a second field, wherein when a value of the second field is a second preset value, the second field indicates that the first beam is for beam switching of a plurality of carriers CCs.

46. The apparatus according to claim 44 or 45, wherein the configuration information of the first reporting configuration is carried in second DCI, and the second DCI is for scheduling data on a physical uplink data channel PUSCH.

47. The apparatus according to any one of claims 44 to 46, wherein the configuration information of the first reporting configuration and the first indication information are carried in a same message.

48. The apparatus according to any one of claims 37 to 47, wherein the at least one RS comprises a tracking reference signal TRS, the TRS is not repeatedly configured, and there is a quasi co-location QCL relationship between the TRS and a first synchronization signal block SSB.

49. A communication apparatus, wherein the communication apparatus comprises:
a memory, configured to store computer instructions; and
a processor, configured to execute a computer program or the computer instructions stored in the memory, to enable the communication apparatus to perform the method according to any one of claims 1 to 12, or enable the communication apparatus to perform the method according to any one of claims 13 to 24.

50. A computer-readable storage medium, wherein the medium stores instructions, and when the instructions are executed by a computer, the method according to any one of claims 1 to 24 is implemented.
